# EUROPÄISCHE PATENTSCHRIFT

(11) **EP 3 809 111 B1**
(45) Veröffentlichungstag und Bekanntmachung des Hinweises auf die Patenterteilung: **09.08.2023**
(21) Anmeldenummer: 19202895.9
(22) Anmeldetag: 14.10.2019
(51) Int. Cl.: G01N 1/22

(54) **GASENTNAHMEVORRICHTUNG UND -VERFAHREN**
GAS SAMPLING DEVICE AND METHOD
DISPOSITIF ET PROCÉDÉ DE PRÉLÈVEMENT DE GAZ

(43) Veröffentlichungstag der Anmeldung: 21.04.2021
(73) Patentinhaber: Primetals Technologies Austria GmbH, 4031 Linz (AT)
(72) Erfinder: Reischl, Christoph, 4162 Julbach (AT); Tratnig, Mark, 9173 St. Margareten i.R. (AT)
(74) Vertreter: Metals@Linz

(56) Entgegenhaltungen:
- EP-A1- 1 767 920
- JP-U- S55 139 441
- JP-Y2- S5 824 188
- US-A- 6 148 678

## Beschreibung

Die Erfindung betrifft eine Entnahmevorrichtung gemäß Patentanspruch 1, ein System gemäß Patentanspruch 8 und ein Verfahren zum Betrieb solch einer Entnahmevorrichtung gemäß Patentanspruch 9.

Aus der EP 1 767 920 B1 ist eine Vorrichtung zur Entnahme heißer Gasproben aus einem Reaktionsgefäß bekannt.

Aus US 6 148 678 A, JP S58 24188 Y2 und JP S55 139441 U sind Entnahmevorrichtungen mit Filter bekannt.

Es ist Aufgabe der Erfindung, eine verbesserte Entnahmevorrichtung, ein verbessertes System und ein verbessertes Verfahren zum Betrieb solch einer Entnahmevorrichtung bereitzustellen.

Diese Aufgabe wird mittels einer Entnahmevorrichtung gemäß Patentanspruch 1, eines Systems gemäß Patentanspruch 8 und einem Verfahren gemäß Patentanspruch 9 gelöst. Vorteilhafte Ausführungsformen sind in den abhängigen Ansprüchen angegeben.

Es wurde erkannt, dass eine verbesserte Entnahmevorrichtung einer ein heißes Gas aufweisender Gasprobe aus einem Abgasstrang eines Reaktionsgefäßes, insbesondere eines LD-Konverters (Linz-Donawitz-Konverter, auch als basic oxygen process Konverter bezeichnet) oder eines Lichtbogenofens, dadurch bereitgestellt werden kann, dass die Entnahmevorrichtung ein Entnahmegehäuse und eine Filtereinrichtung aufweist. Das heiße Gas weist zumindest einen ersten Anteil und einen zweiten Anteil an Partikelmaterial auf. Das Entnahmegehäuse weist eine Zuführöffnung zur Zuführung des heißen Gases als Gasprobe in einen Innenraum des Entnahmegehäuses auf. Stromabwärtsseitig der Zuführöffnung ist die Filtereinrichtung im Innenraum des Entnahmegehäuses (bezogen auf eine Strömungsrichtung des heißen Gases im Innenraum) angeordnet, um bei Durchführung des heißen Gases den zweiten Anteil an Partikelmaterial aus dem Gas zu filtern. Die Entnahmevorrichtung weist ferner einen Vorabscheider mit einer Magnetanordnung auf. Die Magnetanordnung stellt ein Gesamtmagnetfeld bereit. Dabei ist die Magnetanordnung derart ausgebildet, dass das Gesamtmagnetfeld zumindest abschnittweise den Innenraum zwischen der Filtereinrichtung und dem Entnahmegehäuse zur Abscheidung des ersten Anteils an Partikelmaterial aus dem Gas an einer Abscheidefläche der Entnahmevorrichtung durchdringt. Ferner weist die Entnahmevorrichtung eine thermische Isolierschicht auf, wobei die thermische Isolierschicht zwischen dem Entnahmegehäuse und der Magnetanordnung angeordnet ist. Die thermische Isolierschicht isoliert die Magnetanordnung thermisch gegenüber dem Entnahmegehäuse.

Diese Ausgestaltung hat den Vorteil, dass ein zumindest teilweises Zusetzen bzw. ein zumindest teilweises Verstopfen der Filtereinrichtung während der Entnahme des heißen Gases, insbesondere während eines laufenden Prozesses im Reaktionsgefäß, reduziert bzw. vermieden wird. Ferner kann eine thermische Überhitzung der Magnetanordnung durch das heiße Gas und/oder einer Heizeinrichtung der Entnahmevorrichtung vermieden werden. Die Heizeinrichtung zur Beheizung des Innenraums ist vorzugsweise zwischen der thermischen Isolierschicht und dem Entnahmegehäuse angeordnet. Zusätzlich kann die Heizeinrichtung versetzt zu der Magnetanordnung angeordnet sein.

Des Weiteren hat die Entnahmevorrichtung den Vorteil, dass durch das Vorabscheiden des ersten Anteils an Partikelmaterial aus dem Gas fortwährend während des Prozesses, beispielsweise eines BOF-Prozesses (Basic Oxygen Furnace) im LD-Konverter oder eines EAF-Prozesses (Electric Arc Furnace) im Lichtbogenofen, Prozessparameter während des gesamten Prozesses überwacht werden können, ohne dass die Entnahmevorrichtung während des laufenden Prozesses im Reaktionsgefäß gereinigt werden muss. Somit können Zwischenreinigungen des im Reaktionsgefäß laufenden Prozesses vermieden werden.

Des Weiteren weist die Entnahmevorrichtung durch die Bereitstellung des Vorabscheiders mit der Magnetanordnung ein besonders geringes Innenvolumen auf. Ferner kann auf weitere Vorabscheider, beispielsweise einen Zyklon-Vorabscheider verzichtet werden.

Durch die oben beschriebene Entnahmevorrichtung kann insbesondere Partikelmaterial, das teilmagnetisierbar oder magnetisierbar ist, auf einfache Weise aus dem heißen Gas gefiltert werden. Dabei genügt schon eine Teilmagnetisierbarkeit des Partikelmaterials, zum Beispiel wenn unmagnetisches Partikelmaterial mit magnetischem Partikelmaterial verschmolzen ist oder diesem aneinanderhaftet, um das Partikelmaterial mittels des Vorabscheiders auszufiltern.

Auch weist die Entnahmevorrichtung eine hohe thermische Dauereignung auf, sodass die Entnahmevorrichtung besonders gut zur Entnahme von heißem Gas aus Hochtemperaturbereichen, insbesondere aus Konvertern für den BOF-Prozess oder aus Lichtbogenöfen, geeignet ist.

In einer Ausführungsform weist das Entnahmegehäuse einen ersten Gehäusebereich und einen zweiten Gehäusebereich auf, wobei vorteilhafterweise zumindest der zweite Gehäusebereich einen ferritischen und/oder ferromagnetischen Werkstoff aufweist, wobei der erste Gehäusebereich den Innenraum begrenzt und ausgebildet ist, das heiße Gas im Innenraum zu führen. Am zweiten Gehäusebereich ist die Magnetanordnung zumindest abschnittweise angeordnet und ausgebildet, ein durch die Magnetanordnung bereitstellbares Magnetfeld in den Innenraum zur Ausbildung des Gesamtmagnetfelds zu führen. Durch die Führung des ersten Magnetfelds mittels des zweiten Gehäusebereichs kann gezielt lokal, z. B. am Beginn eines Ringspalts zwischen Filtereinrichtung und Entnahmegehäuse, das Gesamtmagnetfeld ausgebildet, beispielsweise konzentriert, werden. Dadurch wird eine besonders gute Filterwirkung des Vorabscheiders erzielt.

Der zweite Gehäusebereich weist auch einen paramagnetischen oder einen diamagnetischen Werkstoff auf. Von besonderem Vorteil ist hierbei, wenn der zweite Gehäusebereich eine geringere Wandstärke als der erste Gehäusebereich aufweist, um eine Wirkung der Magnetanordnung zu maximieren. Vorteilhafterweise weist dabei das Entnahmegehäuse einen wärmeleitfähigen Werkstoff auf. Von besonderem Vorteil ist, wenn das Entnahmegehäuse wenigstens einen der folgenden Werkstoffe aufweist: Stahl, nichtrostenden Stahl, austenitischer Stahl, Werkstoff Nr.: 1.4571, 1.4404, paramagnetisches Material, ferritisches Material, ferromagnetisches Material. Ein Anhaften von Partikelmaterial am ersten Gehäusebereich kann beispielsweise durch den paramagnetischen Werkstoff reduziert werden. Besonders von Vorteil ist ferner, wenn der Werkstoff des Entnahmegehäuses zusätzlich temperaturbeständig bis beispielsweise 900 °C und/oder korrosionsbeständig ist.

In einer weiteren Ausführungsform weist das Entnahmegehäuse an einer äußeren Umfangsseite wenigstens eine sich in Richtung des Innenraums erstreckende Ausnehmung auf, wobei in dem ersten Gehäusebereich die Ausnehmung angeordnet ist, wobei der zweite Gehäusebereich zumindest abschnittweise in der Ausnehmung angeordnet ist, wobei die Magnetanordnung außenseitig des zweiten Gehäusebereichs angeordnet ist. Von besonderem Vorteil ist hierbei, wenn der zweite Gehäusebereich korrespondierend zu einem Teilbereich der Magnetanordnung ausgebildet ist, mit der die Magnetanordnung an dem Gehäusebereich angeordnet ist. Dadurch können magnetische Streufelder im Innenraum reduziert werden. Die Ausnehmung kann nutförmig ausgebildet sein oder innenseitig in dem Innenraum münden.

In einer weiteren Ausführungsform erstreckt sich das Entnahmegehäuse entlang einer Achse, wobei die Magnetanordnung wenigstens zwei in Umfangsrichtung bezogen auf die Achse versetzt zueinander angeordnete Magnete aufweist, wobei jeder der Magnete jeweils ein Magnetfeld bereitstellt, wobei die Magnetfelder zumindest abschnittsweise den Innenraum durchdringen und gemeinsam das Gesamtmagnetfeld ausbilden. Dadurch kann das Gesamtmagnetfeld den Innenraum derart durchdringen, dass das heiße Gas das Gesamtmagnetfeld passieren muss und ein Vorbeiströmen des heißen Gases am Gesamtmagnetfeld im Wesentlichen vermieden werden kann. Auch kann die Magnetanordnung mehrere in Richtung der Achse versetzt angeordnete Magnete aufweisen, die beispielsweise in einer Reihe zueinander angeordnet sind.

In einer weiteren Ausführungsform erstreckt sich das Entnahmegehäuse entlang einer Achse, wobei die Magnetanordnung wenigstens einen Magneten aufweist. Der Magnet weist eine erste Polfläche und eine versetzt zu der ersten Polfläche angeordnete zweite Polfläche auf. Ein Magnetfeld des Magneten tritt an der ersten Polfläche aus dem Magneten aus und tritt an der zweiten Polfläche in den Magneten wieder ein. Der Magnet ist an dem Entnahmegehäuse derart angeordnet, dass das Magnetfeld zumindest teilweise das Gesamtmagnetfeld in dem Innenraum ausbildet. Die erste Polfläche ist, bezogen auf eine Strömungsrichtung des heißen Gases in dem Innenraum, stromaufwärtsseitig zu der zweiten Polfläche angeordnet. Diese Ausgestaltung hat den Vorteil, dass Partikelmaterial auf dem Weg zu der Abscheidefläche einen besonders kurzen Weg zurücklegen muss, sodass besonders viel Partikelmaterial aus dem Gas durch den Vorabscheider an der Abscheidefläche abgeschieden werden kann. Zusätzlich oder alternativ können die erste Polfläche und die zweite Polfläche in Umfangsrichtung zu der Achse versetzt angeordnet sein.

In einer weiteren Ausführungsform ist der Magnet als Elektromagnet ausgebildet und weist wenigstens einen Spulenkern auf, wobei der Spulenkern mehrlagig oder einstückig und materialeinheitlich ausgebildet ist. Der Spulenkern kann wenigstens einen der folgenden Werkstoffe aufweisen: weichmagnetisches Material, Reineisen, Eisen, Silizium, Nickel, Eisen-Silizium-Legierung, Eisen-Silizium-Legierung gemäß DIN EN 10106, Eisen-Silizium-Legierung gemäß DIN EN 10107, Nickel-Eisen-Legierung.

In einer weiteren Ausführungsform ist der Magnet als Permanentmagnet ausgebildet und kann wenigstens einen der folgenden Werkstoffe aufweisen: unlegierten Stahl, legierten Stahl, Wolfram, Kobalt, legierten Stahl mit Wolfram und/oder Kobalt, Fe-AlNiCo-Legierung, Selten-Erden-Legierung, SmCo, NdFeB, hartmagnetisches Material. Diese Werkstoffe eignen sich insbesondere dafür, dass der Permanentmagnet einer hohen Temperatur, insbesondere bis zu 500 °C, ausgesetzt werden kann und gleichzeitig eine Umorientierung von weißschen Bezirken im Permanentmagneten vermieden wird. Auch kann die Magnetanordnung eine Kombination aus Elektromagnet und Permanentmagnet aufweisen, wobei beispielsweise der Elektromagnet den Permanentmagneten umgreift.

Ein System zur Entnahme eines heißen Gases aus einem Abgasstrang eines Reaktionsgefäßes, insbesondere eines LD-Konverter oder eines Lichtbogenofen, wird dadurch bereitgestellt dass das System die oben beschriebene Entnahmevorrichtung, eine Gasfördereinrichtung und eine Analyseeinrichtung aufweist, wobei die Entnahmevorrichtung mit der Analyseeinrichtung und der Gasfördereinrichtung fluidisch verbunden ist. Die Gasfördereinrichtung ist ausgebildet, das heiße Gas über die Entnahmevorrichtung aus dem Abgasstrang des Reaktionsgefäßes in die Analyseeinrichtung zu fördern, wobei die Analyseeinrichtung ausgebildet ist, eine Zusammensetzung des heißen Gases zumindest teilweise zu bestimmen. Durch die Entnahmevorrichtung wird beispielsweise sichergestellt, dass während eines Prozesses, insbesondere dem BOF-Prozess im Konverter oder dem EAF-Prozess (Electric Arc Furnace) im Lichtbogenofen, keine Zwischenreinigung der Entnahmevorrichtung durchgeführt werden muss, sodass die Analyseeinrichtung fortwährend über den gesamten Prozess im Reaktionsgefäß hinweg wenigstens eine wichtige Prozessinformation, insbesondere die Zusammensetzung des Gases, liefern kann und somit der Prozess im Reaktionsgefäß besonders gut auf Grundlage der Prozessinformation der Analyseeinrichtung gesteuert werden kann. Insbesondere kann dadurch besonders präzise beispielsweise ein Zeitpunkt zum Abschalten des Sauerstoffblasens während des BOF-Prozesses bestimmt werden, sodass ein unnötiger Verschleiß des Konverters vermieden werden kann. Ferner weist das System eine besonders kurze Ansprechzeit auf. Dadurch können hochdynamische Messdaten durch die Analyseeinrichtung bereitgestellt werden, die zum einen eine Anlagensicherheit erhöhen, und die zum anderen einen metallurgischen Prozess im Reaktionsgefäß besonders reaktionsschnell überwachen lassen. Ferner kann auf ein Nachblasen, beispielsweise im BOF-Prozess, verzichtet werden.

Insbesondere wird vermieden, dass sich zu bestimmten Zeiten, beispielsweise während einer Schrottschmelze, im Prozess im Reaktionsgefäß die Filtereinrichtung der Entnahmevorrichtung zusetzt. Durch die oben beschriebene Entnahmevorrichtung wird auch während der Schrottschmelze die Gasanalyse des heißen Gases durch die Analyseeinrichtung sichergestellt.

Auch kann eine Förderleistung der Fördereinrichtung erhöht werden, sodass dadurch eine Reaktionszeit des Systems weiter reduziert wird. Dadurch können metallurgische, insbesondere computerimplementierte Modelle mit besonders präzisen, situationsaktuellen und gering zeitverzögerten Informationen und/oder Messdaten versorgt werden, sodass eine besonders präzise Modellrechnung sichergestellt ist.

Insbesondere wird beim BOF-Prozess eine hohe Treffergenauigkeit für die Bereitstellung einer Menge an einzublasendem Sauerstoff sichergestellt sowie ein Überblasen der Schmelze im Reaktionsgefäß und damit ein unnötiger Verbrauch von Sauerstoff, ein Überhitzen der Schmelze und ein unnötiger Verbrauch von anderen Zuschlagstoffen und Feuerfestmaterial vermieden. Auch wird ein Verschleiß von feuerfestem Material zur Auskleidung des Konverters reduziert. Des Weiteren kann dadurch eine Zykluszeit des BOF-Prozesses pro Schmelze reduziert werden.

Die verkürzte Reaktionszeit bewirkt beim EAF-Prozess im Lichtbogenofen, dass Brennersauerstoff und Brenngas/Brennstoff eingespart werden, da auf Grundlage des für die Gasprobe durch die Entnahmevorrichtung geführten und gefilterten Gases besonders schnell und präzise eine Atmosphäre im Lichtbogenofen analysiert werden kann und auf Grundlage der bestimmten Gaszusammensetzung der EAF-Prozess gesteuert werden kann. Auch wird eine Feuerfestausmauerung im Lichtbogenofen gering belastet und elektrische Energie zum Betrieb des Lichtbogenofens eingespart. Die elektrische Energie wird ferner auch dadurch gespart, dass das brennbare Abgas nicht nutzlos abgeführt wird, sondern aufgrund der Information, dass offenbar brennbares Abgas im Lichtbogenofen vorhanden ist, dieses noch im Lichtbogenofen (z.B. durch die O2-Eindüsung) verbrannt wird. Zusätzlich kann, da die Gaszusammensetzung des Lichtbogenofens verzögerungsarm bekannt ist, auch auf gefährliche Situationen (z. B. explosives beispielsweise wasserstoffhaltiges Abgas) schnell reagiert werden.

Des Weiteren ist ein Elektrodenverschleiß im Lichtbogenofen durch die reduzierte Zykluszeit des EAF-Prozesses reduziert, da weniger elektrische Energie über die Elektroden eingebracht wird und mehr chemische Energie aus der Abgasverbrennung genutzt wird.

Sowohl im BOF-Prozess als auch im EAF-Prozess stellt sich durch die schnelle Gasanalyse die geringe Zykluszeit ein. Mit der oben beschriebenen Entnahmevorrichtung wird eine erhöhte Prozesssicherheit sichergestellt, da explosionsgefährliche Gaszusammensetzungen oder ein gefährliches Eintreten von Ofen-Kühl-Panel-Wasser in das Reaktionsgefäß besonders schnell erkannt werden können und somit ein nachlaufender Schaden, beispielsweise eine Explosion, vermieden wird.

Ein Verfahren zum Betrieb der oben beschriebenen Entnahmevorrichtung wird dadurch bereitgestellt dass das heiße Gas über die Zuführöffnung in das Entnahmegehäuse gefördert wird, wobei der Vorabscheider zumindest den ersten Anteil an Partikelmaterial aus dem heißen Gas mittels des Gesamtmagnetfelds anzieht und an der Abscheidefläche abscheidet, wobei die Filtereinrichtung zumindest den zweiten Anteil an Partikelmaterials aus dem heißen Gas filtert, wobei nach zumindest abschnittsweiser Durchströmung des Gesamtmagnetfelds das heiße Gas die Filtereinrichtung durchströmt, wobei das gefilterte heiße Gas aus der Entnahmevorrichtung abgeführt wird. Ferner isoliert die thermische Isolierschicht die Magnetanordnung thermisch gegenüber dem Entnahmegehäuse.

In einer Ausführungsform des Verfahrens wird eine Förderung des Gases beendet. Ein Reinigungsgas wird in die Entnahmevorrichtung eingeleitet, wobei das Reinigungsgas zumindest teilweise den ersten Anteil an Partikelmaterial von der Abscheidefläche löst. Das Reinigungsgas wird mit dem gelösten ersten Anteil an Partikelmaterial über die Zuführöffnung zur Reinigung der Entnahmevorrichtung abgeblasen. Diese Ausgestaltung hat den Vorteil, dass eine besonders schnelle und einfache Reinigung des Vorabscheiders bereitgestellt werden kann.

In einer weiteren Ausführungsform des Verfahrens wird ein Elektromagnet der Magnetanordnung zum Abscheiden des ersten Anteils an Partikelmaterial derart gesteuert, dass der Elektromagnet ein erstes Magnetfeld zur Ausbildung des Gesamtmagnetfelds im Innenraum bereitstellten. Der Elektromagnet wird derart gesteuert, dass der Elektromagnet ein drittes Magnetfeld bereitstellt, wobei das dritte Magnetfeld gegenpolig zu dem ersten Magnetfeld ausgebildet ist, um im Innenraum (90) der Entnahmevorrichtung (15) aufmagnetisierte Komponenten zumindest teilweise zu entmagnetisieren. Zumindest teilweise wird der erste Anteil an Partikelmaterial von der Abscheidefläche gelöst. Das Lösen des ersten Anteils kann beispielsweise mittels des Reinigungsgases oder mechanisch beispielsweise mittels eines Schiebers erfolgen. Diese Ausgestaltung hat den Vorteil, dass ein Anhaften aufgrund einer Restmagnetisierung vermieden wird bzw. reduziert ist und der erste Anteil an Partikelmaterial besonders leicht sich von der Abscheidefläche löst und die Abscheidefläche bzw. die Entnahmevorrichtung besonders leicht gereinigt werden kann. Beim Abblasen des ersten Anteils ist nur ein geringer Volumeneinsatz von Reinigungsgas, beispielsweise von Stickstoff oder Argon, notwendig.

In einer weiteren Ausführungsform des Verfahrens wird ein Elektromagnet der Magnetanordnung zum Abscheiden des ersten Anteils an Partikelmaterial derart gesteuert, dass der Elektromagnet ein erstes Magnetfeld und ein Permanentmagnet der Magnetanordnung ein zweites Magnetfeld zur Ausbildung des Gesamtmagnetfelds im Innenraum bereitstellen. Der Elektromagnet wird derart gesteuert, dass der Elektromagnet ein drittes Magnetfeld bereitstellt, wobei das dritte Magnetfeld gegenpolig zu dem ersten Magnetfeld ausgebildet ist, um zumindest abschnittsweise im Innenraum das zweite Magnetfeld zu reduzieren, vorzugsweise zu neutralisieren. Zumindest teilweise wird der erste Anteil an Partikelmaterial von der Abscheidefläche gelöst. Das dritte Magnetfeld wird zumindest während der Reinigung der Abscheidefläche bereitgestellt und vorzugsweise fortwährend während der Reinigung aufrechterhalten. Dadurch wird eine erneute Anziehung des ersten Anteils an Partikelmaterial an die Abscheidefläche vermieden.

Nachfolgend wird die Erfindung anhand von Figuren näher erläutert. Dabei zeigen:
- FIG 1: einen Längsschnitt durch ein System mit einer Entnahmevorrichtung

- FIG 2: ein Ablaufdiagramm eines Verfahrens zum Betrieb des in FIG 1 gezeigten Systems;
- FIG 3: ein Diagramm einer magnetischen Flussdichte B aufgetragen über einer magnetischen Feldstärke H;
- FIG 4: einen Ausschnitt des in FIG 1 gezeigten Systems mit einer Entnahmevorrichtung gemäß einer erfindungsgemäßen Ausführungsform;
- FIG 5: eine Schnittansicht entlang einer in FIG 4 gezeigten Schnittebene A-A durch das in FIG 4 gezeigte System;
- FIG 6: einen Ausschnitt eines Längsschnitts durch ein System mit einer Entnahmevorrichtung

- FIG 7: einen in FIG 6 markierten Ausschnitt A der Entnahmevorrichtung;
- FIG 8: eine Schnittansicht entlang einer in FIG 6 gezeigten Schnittebene B-B durch das in den FIGN 6 und 7 gezeigte System;
- FIG 9: eine Seitenansicht auf einen Spulenkern eines Magneten einer in den FIGN 6 bis 8 gezeigten Magnetanordnung;
- FIG 10: eine Schnittansicht entlang einer in FIG 9 gezeigten Schnittebene C-C durch den Spulenkern;
- FIG 11: eine Schnittansicht entlang der in FIG 9 gezeigten Schnittebene C-C durch eine Weiterbildung des in FIG 9 gezeigten Spulenkerns;
- FIGN 12 bis 17: jeweils einen Ausschnitt eines Längsschnitts durch eine Entnahmevorrichtung, wobei die
- FIGN 14 und 16: nicht mit der Erfindung kombinierbare Abwandlungen zeigen;

- FIG 18: eine Schnittansicht entlang einer in FIG 17 gezeigten Schnittebene D-D durch die in FIG 17 gezeigte Entnahmevorrichtung;
- FIG 19: einen Ausschnitt eines Längsschnitts durch eine Entnahmevorrichtung

- FIG 20: eine Schnittansicht entlang einer in FIG 19 gezeigten Schnittebene E-E durch die in FIG 19 gezeigte Entnahmevorrichtung;
- FIG 21: einen Ausschnitt eines Längsschnitts durch eine Entnahmevorrichtung

- FIG 22: eine Schnittansicht entlang einer in FIG 21 gezeigten Schnittebene F-F durch die in FIG 21 gezeigte Entnahmevorrichtung;
- FIG 23: einen Ausschnitt eines Längsschnitts durch eine Entnahmevorrichtung

- FIG 24: eine Schnittansicht durch die in FIG 23 gezeigte Entnahmevorrichtung entlang einer in FIG 23 gezeigten Schnittebene H-H;
- FIG 25: einen Ausschnitt eines Längsschnitts durch eine Ausführungsform der Entnahmevorrichtung

- FIG 26: eine Schnittansicht entlang einer in FIG 25 gezeigten Schnittebene G-G durch die in FIG 25 gezeigte Entnahmevorrichtung;
- FIG 27: einen Ausschnitt eines Längsschnitts durch eine Entnahmevorrichtung

- FIG 28: eine Schnittansicht entlang einer in FIG 27 gezeigten Schnittebene I-I durch die in FIG 27 gezeigte Entnahmevorrichtung;
- FIG 29: einen Ausschnitt eines Längsschnitts durch eine Entnahmevorrichtung

- FIG 30: eine Schnittansicht entlang einer in FIG 29 gezeigten Schnittebene J-J durch die in FIG 29 gezeigte Ausführungsform der Entnahmevorrichtung;
- FIGN 31 bis 33: einen Ausschnitt eines Längsschnitts durch eine Entnahmevorrichtung
- FIG 34: eine Schnittansicht entlang einer in FIG 33 gezeigten Schnittebene K-K durch die in FIG 33 gezeigte Entnahmevorrichtung;
- FIG 35: einen Längsschnitt durch eine Entnahmevorrichtung

- FIG 36: einen in FIG 35 markierten Ausschnitt C der in FIG 35 gezeigten Entnahmevorrichtung;
- FIG 37: eine Schnittansicht entlang einer in FIG 35 gezeigten Schnittebene L-L durch die in FIG 36 gezeigte Entnahmevorrichtung;
- FIGN 38 bis 44: einen Ausschnitt eines Längsschnitts durch eine Entnahmevorrichtung, wobei die FIGN 41-44 nicht mit der Erfindung kombinierbare Abwandlungen zeigen.

- FIG 45: einen Ausschnitt eines Längsschnitts durch eine Entnahmevorrichtung

- FIG 46: eine perspektivische Darstellung des in FIG 45 gezeigten Koppelelementes;
- FIGN 47: eine Schnittansicht entlang einer in FIG 46 gezeigten Schnittebene P-P durch das in den FIGN 45 und 46 gezeigte Koppelelement;
- FIG 48: eine Schnittansicht entlang einer in FIG 46 gezeigten Schnittebene Q-Q durch das Koppelelement;
- FIG 49: eine perspektivische Darstellung des in FIG 45 gezeigten Adapterrings;
- FIG 50: eine Schnittansicht entlang der in FIG 49 gezeigten Schnittebene P-P durch den Adapterring;
- FIG 51: eine Schnittansicht entlang der in FIG 49 gezeigten Schnittebene Q-Q durch den Adapterring;
- FIG 52: eine Schnittansicht entlang einer in FIG 45 gezeigten Schnittebene M-M durch die in FIG 45 gezeigte Entnahmevorrichtung.

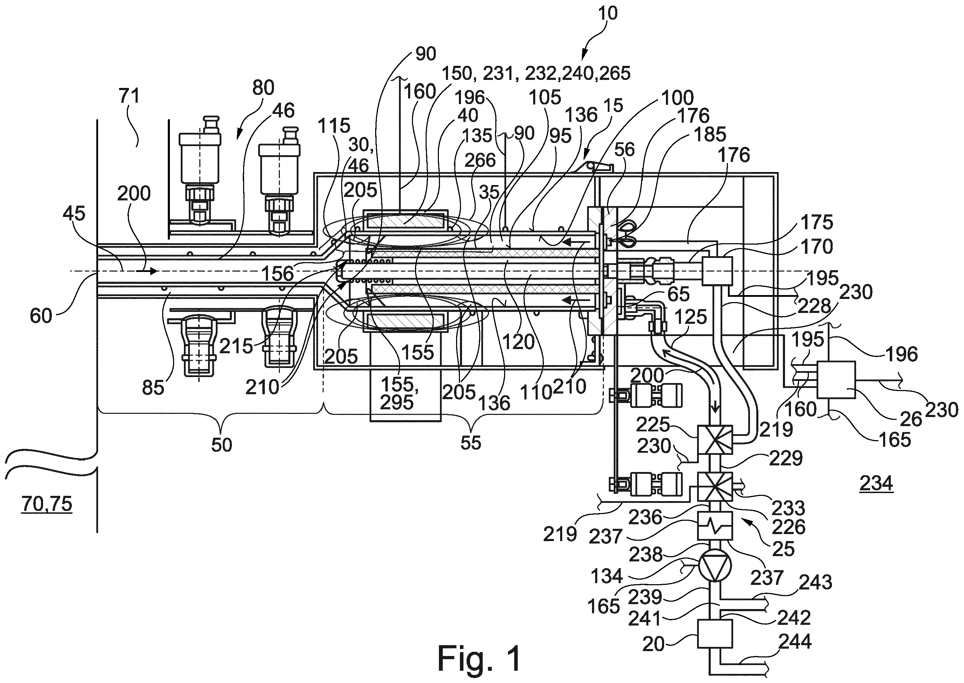

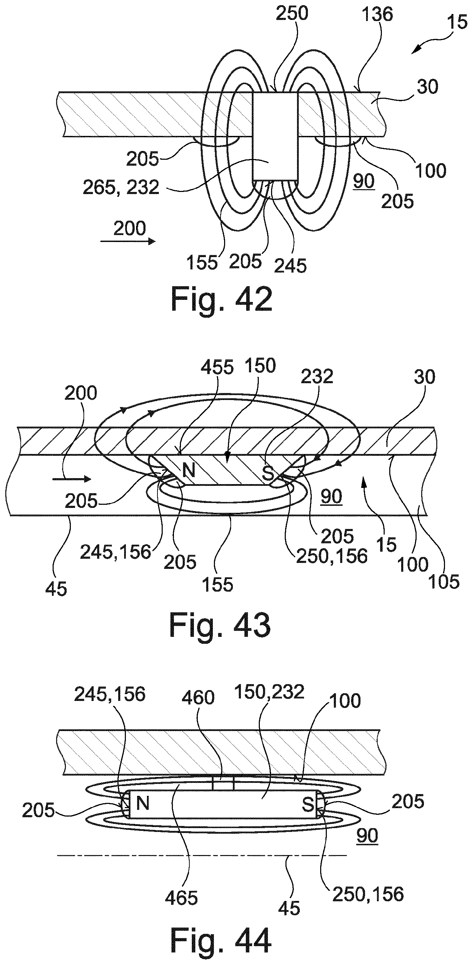

In den folgenden FIGN 1, 3 bis 52 wird zum erleichterten Verständnis auf ein polares Koordinatensystem in Bezug auf eine Achse 45 referenziert. Dabei wird unter einer Axialrichtung eine Richtung entlang bzw. parallel zu der Achse 45, einer Radialrichtung eine Richtung senkrecht zu der Achse 45 und unter einer Umfangsrichtung eine Richtung tangential zu einer Kreisbahn um die Achse 45 verstanden.

FIG 1 zeigt einen Längsschnitt durch ein System 10 mit einer Entnahmevorrichtung 15.

Das System 10 weist neben der Entnahmevorrichtung 15 ferner eine Analyseeinrichtung 20, eine Gasfördereinrichtung 25 und eine Steuereinrichtung 26 auf. Die Entnahmevorrichtung 15 weist ein Entnahmegehäuse 30, eine Filtereinrichtung 35 und einen Vorabscheider 40 auf.

Das Entnahmegehäuse 30 erstreckt sich in seiner Haupterstreckungsrichtung entlang der Achse 45. Das Entnahmegehäuse 30 weist einen Innenraum 90, ein Innenrohr 46 mit einem Sondenabschnitt 50, einem Filterabschnitt 55 und einem Übergangsabschnitt 115 sowie einen Deckel 56 auf. Der Übergangsabschnitt 115 ist in Axialrichtung zwischen dem Filterabschnitt 55 und dem Sondenabschnitt 50 angeordnet und verbindet den Filterabschnitt 55 mit dem Sondenabschnitt 50. Der Sondenabschnitt 50 ist beispielhaft in radialer Richtung schlanker ausgebildet als der Filterabschnitt 55. Der Filterabschnitt 55 und/oder der Sondenabschnitt 50 können hohlzylindrisch ausgebildet sein. Auch eine andere Hohlprofilform wäre möglich.

Auf einer dem Filterabschnitt 55 abgewandten Seite weist der Sondenabschnitt 50 eine Zuführöffnung 60 auf. Ferner weist das Entnahmegehäuse 30 eine Abführöffnung 65 auf, die in Längsrichtung beispielhaft auf der der Zuführöffnung 60 gegenüberliegenden Axialseite in dem Deckel 56 des Entnahmegehäuses 30 angeordnet ist.

Die Zuführöffnung 60 ist im montierten Zustand des Systems 10 an einem Abgasstrang 71 eines Reaktionsgefäßes 70 mit einem Gefäßinnenraum 75 fluidisch gekoppelt. Insbesondere kann die Zuführöffnung 60 in dem Gefäßinnenraum 75 münden. Der Deckel 56 ist auf der zur Zuführöffnung 60 gegenüberliegenden Axialseite angeordnet. Der Deckel 56 begrenzt somit stirnseitig den Innenraum 90. Der Deckel 56 ist mit dem Filterabschnitt 55 verbunden. An dem Deckel 56 kann die Filtereinrichtung 35 innenseitig befestigt sein.

Das Reaktionsgefäß 70 kann beispielsweise dazu dienen, in einer großtechnischen Anlage ein Metall, insbesondere Stahl, aus einem Rohstoff, beispielsweise Roheisen, herzustellen. So kann beispielsweise das Reaktionsgefäß 70 ein Konverter, beispielsweise einer BOF-Anlage (Basic Oxygen Furnace) oder ein Lichtbogenofen, sein. Auch kann das Reaktionsgefäß 70 Teil einer anderen metallurgischen Anlage mit magnetischem Staubgehalt sein.

Der Sondenabschnitt 50 kann mittels einer ersten Kühleinrichtung 80 gekühlt sein, um eine mechanische Stabilität des Sondenabschnitts 50 am heißen Abgasstrang 71 sicherzustellen. Zusätzlich kann das Innenrohr 46 in eine thermische Isolierschicht 85 des Entnahmegehäuses 30 zumindest abschnittsweise eingebettet sein. In radialer Richtung kann die thermische Isolierschicht 85 zwischen der ersten Kühleinrichtung 80 und dem Entnahmegehäuse 30, insbesondere dem Sondenabschnitt 50, angeordnet sein.

Das Innenrohr 46 begrenzt innenseitig den Innenraum 90 im Bereich des Sondenabschnitts 50. In dem Innenraum 90 ist die Filtereinrichtung 35 angeordnet. Die Filtereinrichtung 35 ist an einer Axialseite an dem Deckel 56 befestigt und ist auf der Achse 45 verlaufend in dem Innenraum 90 ausgerichtet. Auch könnte die Filtereinrichtung 35 versetzt zu der Achse 45 oder nicht achsparallel zu der Achse 45 ausgerichtet sein. Eine andere Seite der Filtereinrichtung 35 endet in axialer Richtung beispielhaft beabstandet zu dem Übergangsabschnitt 115. Die Filtereinrichtung 35 weist beispielhaft einen hohlzylindrischen Aufbau auf. Auch eine andere Ausgestaltung der Filtereinrichtung 35 wäre denkbar. Die Filtereinrichtung 35 kann beispielsweise einen Sinterwerkstoff mit einer Porosität von beispielsweise 5 µm aufweisen.

Eine erste äußere Umfangsseite 95 der Filtereinrichtung 35 begrenzt zusammen mit einer inneren Umfangsseite 100 des Entnahmegehäuses 30 einen Ringspalt 105. Die erste äußere Umfangsseite 95 der Filtereinrichtung 35 bildet eine Gaseintrittsfläche der Filtereinrichtung 35 aus.

Zusätzlich kann innenseitig der Filtereinrichtung 35 ein Blasrohr 110 angeordnet sein. Auf das Blasrohr 110 kann auch verzichtet werden. Das Blasrohr 110 durchgreift beispielsweise die Filtereinrichtung 35 in Axialrichtung. Das Blasrohr 110 kann an einer dem Deckel 56 gegenüberliegenden Seite beispielsweise eine Düse 215 aufweisen. Die Düse 215 kann in Richtung der inneren Umfangsseite 100 und/oder der Zuführöffnung 60 ausgerichtet sein. Innenseitig begrenzen die Filtereinrichtung 35 (und ggf. das Blasrohr 110) einen Abführkanal 120, wobei der Abführkanal 120 fluidisch an der Abführöffnung 65 endet.

Außenseitig ist die Abführöffnung 65 mittels einer ersten Fluidverbindung 125 verbunden.

Vorteilhafterweise weist das Entnahmegehäuse 30 einen wärmeleitfähigen ersten Werkstoff auf. Von besonderem Vorteil ist, wenn das Entnahmegehäuse 30 wenigstens einen der folgenden ersten Werkstoffe aufweist: Stahl, nichtrostenden Stahl, austenitischen Stahl, Werkstoff Nr.: 1.4571, 1.4404, paramagnetisches Material, ferritisches Material, ferromagnetisches Material.

Der Vorabscheider 40 ist beispielhaft an der zweiten äußeren Umfangsseite 136 außenseitig des Filterabschnitts 55 des Entnahmegehäuses 30 axial angrenzend an den konusartig ausgebildeten Übergangsabschnitt 115 angeordnet. Auch eine andere Anordnungsposition des Vorabscheiders 40 wäre denkbar.

Der Vorabscheider 40 weist eine Magnetanordnung 150 aus ein oder mehreren (ersten und/oder zweiten) Magneten 265 auf. Der erste und/oder zweite Magnet 265 kann ein oder mehrere Elektromagneten 231 und/oder ein oder mehrere Permanentmagneten 232 aufweisen. Jeder der Magnete 265 stellt ein erstes Magnetfeld 266 bereit, die im Innenraum 90 ein Gesamtmagnetfeld 155 ausbilden. Bei nur einem Magneten 265 entspricht das erste Magnetfeld 266 des Magneten 265 dem Gesamtmagnetfeld 155. Das Gesamtmagnetfeld 155 ist mittels Magnetfeldlinien in FIG 1 schematisch angedeutet. Das Gesamtmagnetfeld 155 durchdringt den Ringspalt 105 radial so weit, dass das Gesamtmagnetfeld 155 vorzugsweise bis zu der ersten äußeren Umfangsseite 95 der Filtereinrichtung 35 reicht.

Der Vorabscheider 40 weist an der inneren Umfangsseite 100 eine Abscheidefläche 156 auf, wobei die Abscheidefläche 156 einen Teilbereich der inneren Umfangsseite 100 ausbildet. Die Abscheidefläche 156 ist dort angeordnet, wo das Gesamtmagnetfeld 155 das Entnahmegehäuse 30 durchdringt und in den Innenraum 90 eintritt und/oder austritt.

Die Magnetanordnung 150 kann, sofern sie wenigstens einen Elektromagneten 231 aufweist, mittels einer ersten Verbindung 160 mit der Steuereinrichtung 26 elektrisch verbunden sein. Der Elektromagnet 231 kann eine Spule 240 und fakultativ einen Spulenkern 235 aufweisen. Die Steuereinrichtung 26 kann eine Energieversorgung des Elektromagneten 231 schaltbar bereitstellen. Ferner kann die Steuereinrichtung 26 ein Steuergerät zur Steuerung von Schaltern, Relais und/oder Leistungselektronik der Steuereinrichtung 26 aufweisen, um die einzelnen Komponenten zu steuern bzw. eine Leistungsversorgung durch das Schalten beispielsweise eines Relais für die Komponente freizuschalten. Ferner ist die Steuereinrichtung 26 über eine zweite Verbindung 165 mit der Förderpumpe 134 verbunden.

Innenseitig der Isolierschicht 85 ist an einer zweiten äußeren Umfangsseite 136 des Innenrohrs 46 eine Heizeinrichtung 135 angeordnet. Die Heizeinrichtung 135 kann beispielsweise elektrisch leitfähige Heizwendeln aufweisen, um das Entnahmegehäuse 30 beispielsweise elektrisch zu beheizen. Von besonderem Vorteil ist, wenn die Heizeinrichtung 135 den Innenraum 90 auf wenigstens 80 bis 170 °C beheizt. Die Heizeinrichtung 135 kann mittels einer dritten Verbindung 196 mit der Steuereinrichtung 26 verbunden sein.

Zusätzlich kann das System 10 eine Ausblaseinrichtung 170 aufweisen, die beispielsweise einen unter Druck stehenden Behälter (nicht in FIG 1 dargestellt), beispielsweise mit einer Stickstoff- und/oder einer Argonfüllung, aufweisen kann. Auch kann der Behälter mit Druckluft oder einem anderen druckbeaufschlagten Gas gefüllt sein. Die Ausblaseinrichtung 170 weist ferner ein erstes Sperrventil 171 und ein zweites Sperrventil 172 auf.

Die Ausblaseinrichtung 170 kann über eine zweite Fluidverbindung 175 mit dem Blasrohr 110 und über eine dritte Fluidverbindung 176 mit wenigstens einer, vorzugsweise mehreren in Umfangsrichtung im Deckel 56 angeordneten Ausblasöffnungen 185 fluidisch verbunden sein. Dabei kann in der zweiten Fluidverbindung 175 das erste Sperrventil 171 und in der dritten Fluidverbindung 176 das zweite Sperrventil 172 angeordnet sein. Die Sperrventile 171, 172 können über eine vierte Verbindung 195 mit der Steuereinrichtung 26 datentechnisch oder elektrisch verbunden sein.

Die Gasfördereinrichtung 25 kann ferner ein schaltbares erstes schaltbares Ventil 225 und ein zweites schaltbares Ventil 226 aufweisen. Das erste und zweite Ventil 225, 226 sind als Mehrwegeventile beispielhaft ausgebildet.

Das erste Ventil 225 ist an einem ersten Anschluss mit der ersten Fluidverbindung 125 verbunden. Ein zweiter Anschluss des ersten Ventils 225 ist mittels einer vierten Fluidverbindung 228 fluidisch mit der Ausblaseinrichtung 170 verbunden.

Eine fünfte Fluidverbindung 229 verbindet einen dritten Anschluss des ersten Ventils 225 fluidisch mit einem ersten Anschluss des zweiten Ventils 226. Das erste Ventil 225 kann ferner mittels einer fünften Verbindung 230 mit der Steuereinrichtung 26 verbunden sein. Die Steuereinrichtung 26 kann das erste Ventil 225 zwischen einer ersten Ventilstellung und einer zweiten Ventilstellung steuern.

Ein zweiter Anschluss des zweiten Ventils 226 ist über eine sechste Fluidverbindung 233 mit einer Umgebung 234 des Systems 10 fluidisch verbunden. Ein dritter Anschluss des zweiten Ventils 226 ist mittels einer siebten Fluidverbindung 236 mit einer Einlassseite des optionalen Gaskühlers 237 fluidisch verbunden. Die Steuereinrichtung 26 kann das zweite Ventil 226 zwischen einer dritten Ventilstellung und einer vierten Ventilstellung steuern. Dazu ist das zweite Ventil 226 mittels einer sechsten Verbindung 219 zumindest datentechnisch und/oder elektrisch mit der Steuereinrichtung 26 verbunden.

Eine Auslassseite des Gaskühlers 237 ist mittels einer achten Fluidverbindung 238 mit einer Förderpumpe 134 der Gasfördereinrichtung 25 fluidisch verbunden. Auf den Gaskühler 237 kann auch verzichtet werden. In diesem Fall sind die siebte und achte Fluidverbindung 236, 238 direkt miteinander verbunden.

Ausgangsseitig ist die Förderpumpe 134 ist über eine neunte Fluidverbindung 239 mit der Analyseeinrichtung 20 fluidisch verbunden. In der neunten Fluidverbindung 239 kann eine Verzweigung 241 und eine der Verzweigung 241 nachgeschaltete Drossel 242 angeordnet sein. An der Verzweigung 241 kann eine zehnte Fluidverbindung 243 angeschlossen sein, die den Abgasstrang 71 mit der Verzweigung 241 verbindet.

Das erste Ventil 225 kann in der ersten Ventilstellung eine fluidische Verbindung zwischen der Abführöffnung 65 und der fünften Fluidverbindung 229 herstellen. In der zweiten Ventilstellung des ersten Ventils 225 ist die fluidische Verbindung zwischen Abführöffnung 65 und der fünften Fluidverbindung 229 unterbrochen.

Das erste Ventil 225 verbindet in der zweiten Ventilstellung über die vierte Fluidverbindung 228 die Ausblaseinrichtung 170 fluidisch mit der ersten Fluidverbindung 125.

Das zweite Ventil 226 verbindet in der dritten Ventilstellung die fünfte Fluidverbindung 229 mit der siebten Fluidverbindung 236. In der vierten Ventilstellung unterbricht das zweite Ventil 226 die fluidische Verbindung zwischen der fünften Fluidverbindung 229 und der siebten Fluidverbindung 236 und verbindet die siebte Fluidverbindung 236 mit der sechsten Fluidverbindung 233.

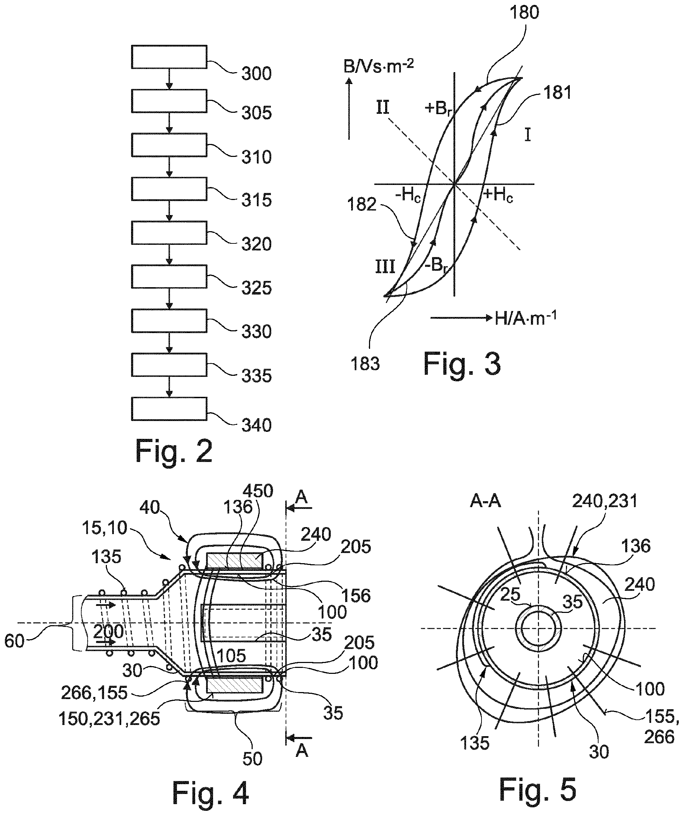

FIG 2 zeigt ein Ablaufdiagramm eines Verfahrens zum Betrieb des in FIG 1 gezeigten Systems 10.

In einem ersten Verfahrensschritt 300 wird zur Entnahme eines heißen Gases 200 aus dem Abgasstrang 71 durch die Steuereinrichtung 26 die Förderpumpe 134 aktiviert. Ferner schaltet die Steuereinrichtung 26 das erste Ventil 225 in die erste Ventilstellung und das zweite Ventil 226 in die dritte Ventilstellung.

Die Förderpumpe 134 stellt einen Unterdruck bereit. Durch den erzeugten Unterdruck wird über die Zuführöffnung 60 heißes Gas 200 aus dem Abgasstrang 71 in den Innenraum 90 eingesaugt. Die Sperrventile 171, 172 sind in Sperrstellung durch die Steuereinrichtung 26 geschalten.

Das heiße Gas 200 nimmt Partikelmaterial 205 aus dem Gefäßinnenraum 75 auf. Das Partikelmaterial 205 kann aufgrund des BOF- oder des EAF-Prozesses beispielsweise Fe₂O₃ und/oder Fe₃C und/oder Fe-Staub und/oder Schrottpartikel aufweisen. Auch kann das mitgenommene Partikelmaterial 205 derart ausgestaltet sein, dass magnetisierbares Partikelmaterial 205 an nichtmagnetisierbarem Partikelmaterial 205 anhaftet und/oder mit magnetischem Partikelmaterial 205 verschmolzen ist.

Das heiße Gas 200 strömt entlang des Sondenabschnitts 50 in axialer Richtung durch den Innenraum 90. Dabei strömt das heiße Gas 200 durch den Sondenabschnitt 50 mit beispielsweise etwa 0,5 Meter pro Sekunde. Gleichzeitig ist die erste Kühleinrichtung 80 aktiviert, um die mechanische Steifigkeit des Sondenabschnitts 50 sicherzustellen und/oder eine thermische Beschädigung der Heizeinrichtung 135 oder einer anderen Komponente der Entnahmevorrichtung 15 zu verhindern. Das heiße Gas 200 wird beim Entlangströmen in dem Sondenabschnitt 50 abgekühlt. Um eine zu starke Abkühlung des beim Eintritt über die Zuführöffnung 60 900 bis 1.500 °C heißen Gases 200 zu verhindern, aktiviert die Steuereinrichtung 26 die Heizeinrichtung 135 derart über die vierte Verbindung 195, dass sich am Filterabschnitt 55 eine Temperatur des heißen Gases 200 von etwa 80 bis 150 °C, vorzugsweise von 80 bis 120 °C, einstellt.

In einem zweiten Verfahrensschritt 305, der parallel zu dem ersten Verfahrensschritt 300 durchgeführt werden kann, aktiviert die Steuereinrichtung 26 die Elektromagneten 231 der Magnetanordnung 150 zur Bereitstellung des Gesamtmagnetfelds 155 im Innenraum 90. Auf den zweiten Verfahrensschritt 305 kann auch verzichtet werden, wenn die Magnetanordnung 150 ausschließlich Permanentmagneten 232 aufweist.

In einem dritten Verfahrensschritt 310 durchströmt das heiße Gas 200 das Gesamtmagnetfeld 155 des Vorabscheiders 40. Ein erster Anteil an Partikelmaterial 205 wird durch das Gesamtmagnetfeld 155 derart abgelenkt, dass das Partikelmaterial 205 an der Abscheidefläche 156 des Filterabschnitts 55 anschlägt. Der erste Anteil an Partikelmaterial 205 umfasst dabei magnetisierbares Partikelmaterial 205 und/oder nichtmagnetisierbares Partikelmaterial 205. Durch das Gesamtmagnetfeld 155 haftet der erste Anteil an Partikelmaterial 205 an der Abscheidefläche 156 an. Insbesondere haftet der erste Anteil an Partikelmaterial 205 in einem Bereich der inneren Umfangsseite 100, in dem das Gesamtmagnetfeld 155 aus dem Innenraum 90 austritt bzw. in den Innenraum 90 eintritt.

Die Steuereinrichtung 26 steuert den Elektromagneten 231 der Magnetanordnung 150 vorteilhafterweise derart an, dass das Gesamtmagnetfeld 155 mit einer vordefinierten Feldstärke zumindest bis an die erste äußere Umfangsseite 95 der Filtereinrichtung 35 reicht. Dadurch wird sichergestellt, dass Partikelmaterial 205, das mit einem geringeren Abstand zu der ersten äußeren Umfangsseite 95 als zu der inneren Umfangsseite 100 des Filterabschnitts 55 strömt, durch das Gesamtmagnetfeld 155 magnetisch angezogen wird und eine Anlagerung an der Abscheidefläche 156 sichergestellt ist.

Das nun vorgereinigte heiße Gas 200 strömt weiter im Ringspalt 105 und tritt über die als Eintrittsfläche ausgebildete erste äußere Umfangsseite 95 in die Filtereinrichtung 35 ein. Die Filtereinrichtung 35 filtert einen zweiten Anteil an Partikelmaterial 205, den der Vorabscheider 40 nicht ausfiltert, beispielsweise Partikelmaterial 205, das nicht magnetisierbar ist, mechanisch. Nach Durchdringen der Filtereinrichtung 35 strömt das heiße Gas 200 in den Abführkanal 120 und über den Abführkanal 120 zu der Abführöffnung 65. Über die Abführöffnung 65 strömt das heiße Gas 200 über die erste Fluidverbindung 125, die vorzugsweise beheizt ist, um eine Kondensatabscheidung in der ersten Fluidverbindung 125 zu vermeiden, zu dem ersten Ventil 225. Von dem ersten Ventil 225 strömt durch den Unterdruck der Förderpumpe 134 das heiße Gas 200 in der ersten Ventilstellung des ersten Ventils 225 entlang der fünften Fluidverbindung 229 zu dem zweiten Ventil 226. Das zweite Ventil 226 befindet sich in der dritten Ventilstellung, sodass das heiße Gas 200 über die siebte Fluidverbindung 236 zu dem Gaskühler 237 strömt. Im Gaskühler 237 wird das heiße Gas 200 weiter abgekühlt. Dabei kann das heiße Gas 200 auf eine Temperatur von 4 bis 10° C abgekühlt werden. Vom Gaskühler 237 wird das abgekühlte Gas 200 über die achte Fluidverbindung 238 von der Förderpumpe 134 angesaugt und druckbeaufschlagt in die neunte Fluidverbindung 239 gefördert.

An der Verzweigung 241 strömt ein erster Teil, beispielsweise 90 Prozent, des abgekühlten heißen Gases 200 in die zehnte Fluidfluidverbindung 243 und von der zehnten Fluidverbindung 243 wieder in den Abgasstrang 71. Ein zweiter Teil des abgekühlten heißen Gases 200 strömt über die Drossel 242 in die Analyseeinrichtung 20.

Die Analyseeinrichtung 20 analysiert eine Zusammensetzung des heißen Gases 200 zumindest teilweise. Beispielsweise bestimmt die Analyseeinrichtung 20 einen Kohlenmonoxidanteil im heißen Gas 200. Die Analyseeinrichtung 20 stellt beispielsweise eine Information über eine Zusammensetzung des analysierten heißen Gases 200 einer weiteren Steuereinrichtung zur Steuerung eines Prozesses in dem Reaktionsgefäß 70 bereit, auf deren Grundlage beispielsweise auf einen Fortschritt eines metallurgisch-chemischen Prozesses, beispielsweise im BOF-Konverter oder im Lichtbogenofen, geschlossen werden kann. Zusätzlich oder alternativ kann auf Grundlage der Information auf einen sicherheitsrelevanten Zustand des heißen Gases 200, beispielsweise über deren Explosivität oder Brennbarkeit, geschlossen werden.

Von der Analyseeinrichtung 20 strömt das heiße Gas 200 zurück zu dem Abgasstrang 71 beispielsweise über eine ausgangsseitig angeordnete elfte Fluidverbindung 244 oder an eine Außenluft. Der erste bis dritte Verfahrensschritt 300, 305, 310 werden vorzugsweise so lange aufrechterhalten, wie der metallurgische Prozess in dem Reaktionsgefäß 70 durchgeführt wird. Beispielsweise bis zum Abstechen des Reaktionsgefäßes 70.

In den auf den dritten Verfahrensschritt 310 folgenden vierten bis achten Verfahrensschritten 315-335 wird die Entnahmevorrichtung 15 gereinigt. Die Reinigung erfolgt insbesondere nach Abschluss des metallurgisch-chemischen Prozesses im Reaktionsgefäß 70, also beispielsweise nach Abschluss des BOF-Prozesses im Konverter oder des EAF-Prozesses im Lichtbogenofen.

In einem vierten Verfahrensschritt 315 ist die Förderpumpe 134 weiter aktiviert. Ferner ist das zweite Ventil 226 in die vierte Ventilstellung durch die Steuereinrichtung 26 geschalten. Gegebenenfalls deaktiviert die Steuereinrichtung 26 die Elektromagnete 231 der Magnetanordnung 150.

Sollte die Magnetanordnung 150 mindestens einen Elektromagneten 231 aufweisen, so fährt die Steuereinrichtung 26 mit einem fünften Verfahrensschritt 320 fort. Weist die Magnetanordnung 150 ausschließlich Permanentmagnete 232 auf, so kann auf den fünften Verfahrensschritt 320 verzichtet werden.

Im vierten bis neunten Verfahrensschritt 315-340 fördert die Förderpumpe 134 über die sechste Fluidverbindung 233 Luft aus der Umgebung 234 statt des heißen Gases 200 durch die Analyseeinrichtung 20 zu der zehnten und elften Fluidverbindung 243, 244.

FIG 3 zeigt ein Diagramm einer magnetischen Flussdichte B aufgetragen über einer magnetischen Feldstärke H.

Ein in FIG 3 gezeigter Graph 180 beschreibt einen Hystereseverlauf des Gesamtmagnetfelds 155 in dem Spulenkern 235 des Elektromagneten 231 und/oder dem Entnahmegehäuse 30.

Ein erster Teilabschnitt 181 des Graphen 180 zeigt den Anstieg des Gesamtmagnetfelds 155 während des zweiten Verfahrensschritts 305. Dabei wird der Spulenkern 235 des Elektromagneten 231 und/oder das Entnahmegehäuse 30 durch das erste Magnetfeld 266 der Spule 240 aufmagnetisiert. Ist kein Spulenkern 235 vorgesehen, wird nur gegebenenfalls das Entnahmegehäuse 30 aufmagnetisiert.

Nach Abschalten der Elektromagneten 231 im vierten Verfahrensschritt 315 durchdringt das Gesamtmagnetfeld 155 aufgrund der Aufmagnetisierung des Spulenkerns 235 und/oder des Entnahmegehäuses 30 als Restmagnetfeld in abgeschwächter Form den Innenraum 90. Dadurch haftet der erste Anteil an Partikelmaterial 205 unerwünschterweise im vierten Verfahrensschritt 315 an der Abscheidefläche 156 an.

Im fünften Verfahrensschritt 320 wird die Magnetanordnung 150 und/oder das Entnahmegehäuse 30 und/oder weitere Komponenten der Entnahmevorrichtung 15 zumindest teilweise entmagnetisiert. Dazu steuert die Steuereinrichtung 26 über die erste Verbindung 160 den Elektromagneten 231 bzw. die Elektromagneten 231 derart an, dass die Magnetanordnung 150 ein weiteres Gesamtmagnetfeld 295 mit negativer Feldstärke und negativer magnetischer Flussrichtung zur Entmagnetisierung des Spulenkerns 235 und/oder des Entnahmegehäuses 30 bereitstellt. Das weitere Gesamtmagnetfeld 295 verläuft in dem Spulenkern 235 und/oder dem Entnahmegehäuse 30 dabei dann entlang des zweiten Teilabschnitts 182 des Graphen 180, bis das weitere Gesamtmagnetfeld 295 auf eine maximale negative Feldstärke Hᵣ und eine maximale negative magnetische Flussdichte Bᵣ abfällt.

In einem sechsten Verfahrensschritt 325 deaktiviert die Steuereinrichtung 26 den Elektromagneten 231. Die magnetische Flussdichte B und die magnetische Feldstärke H in dem Spulenkern 235 und/oder in dem Entnahmegehäuse 30 steigt entlang eines dritten Teilabschnitts 183 des Graphen 180 in Richtung einem Nullwert der magnetischen Flussdichte B und der magnetischen Feldstärke H. Um die Aufmagnetisierung vollständig aufzuheben können, kann der fünfte und sechste Verfahrensschritt 320, 325 wiederholt werden. Dadurch wird die Bereitstellung des Gesamtmagnetfelds 155 nach dem sechsten Verfahrensschritt 325 im Innenraum 90 vermieden.

Durch das Aufheben des Gesamtmagnetfelds 155 haftet an der Abscheidefläche 156 angelagertes Partikelmaterial 205 nur noch leicht lösbar an und/oder löst sich der erste Anteil an Partikelmaterial 205 zumindest abschnittsweise selbsttätig. Auf den fünften und sechsten Verfahrensschritt 320, 325 kann auch verzichtet werden.

In einem auf den sechsten Verfahrensschritt 325 folgenden siebten Verfahrensschritt 330 aktiviert über die zweite Verbindung 165 die Steuereinrichtung 26 die Ausblaseinrichtung 170. Dabei schaltet die Steuereinrichtung 26 die Sperrventile 171, 172 in eine Offenposition.

Über die zweite Fluidverbindung 175 bläst die Ausblaseinrichtung 170 ein Reinigungsgas 210, beispielsweise Stickstoff, aus dem Behälter der Ausblaseinrichtung 170 über die zweite Fluidverbindung 175 und das Blasrohr 110 in den Innenraum 90 ein. Das Reinigungsgas 210 kann aus dem Behälter stammen und druckbeaufschlagt sein. Die Düse 215 kann dabei in Richtung der Zuführöffnung 60 ausgerichtet sein, sodass zumindest ein erster Anteil des Reinigungsgases 210 entlang der Achse 45 in Richtung der Zuführöffnung 60 strömt.

Ferner kann in einer Weiterbildung die Düse 215 des Blasrohrs 110 derart ausgebildet sein, dass ein über die Düse 215 ausgeblasener zweiter Anteil des Reinigungsgases 210 beispielsweise radial nach außen in Richtung der Abscheidefläche 156, an der sich der erste Anteil des Partikelmaterials 205 vorzugsweise im zweiten und dritten Verfahrensschritt 305, 310 angelegt hat, strömt und den anhaftenden, abgeschiedenen ersten Anteil an Partikelmaterial 205 innerhalb eines kurzen Zeitintervalls, beispielsweise 2 bis 5 Sekunden, wenigstens teilweise ablöst.

In einem auf den siebten Verfahrensschritt 330 folgenden achten Verfahrensschritt 335, der auch parallel zu dem siebten Verfahrensschritt 330 durchgeführt werden kann, kann die Steuereinrichtung 26 über die fünfte elektrische Verbindung 230 das erste Ventil 225 in die zweite Ventilstellung schalten. Das Reinigungsgas 210 strömt über die vierte Fluidverbindung 228 zu dem ersten Ventil 225 und von dem ersten Ventil 225 über die erste Fluidverbindung 125 und die Abführöffnung 65 innenseitig in die Filtereinrichtung 35 ein, sodass die Filtereinrichtung 35 von innen nach außen ausgeblasen wird.

Ferner bläst die Ausblaseinrichtung 170 über die Ausblasöffnung 185 das Reinigungsgas 210 über die dritte Fluidverbindung 176 und das geöffnete zweite Sperrventil 172 in den Ringspalt 105 ein.

Die Ausblasöffnung 185 kann beispielsweise düsenförmig ausgebildet sein. Das Reinigungsgas 210 strömt in Gegenrichtung zu dem heißen Gas 200 den Ringspalt 105 entlang und nimmt sowohl das von der Filtereinrichtung 35 als auch von dem Vorabscheider 40 ausgefilterte Partikelmaterial 205 mit. Das Partikelmaterial 205 wird über den Sondenabschnitt 50 und die Zuführöffnung 60 wieder zurück in den Abgasstrang 71 gefördert und ausgeblasen.

In einem auf den achten Verfahrensschritt 335 folgenden neunten Verfahrensschritt 340 steuert die Steuereinrichtung 26 das erste Ventil 225 derart an, dass dieses in die erste Ventilstellung gefahren wird. Ferner steuert die Steuereinrichtung 26 das zweite Ventil 226 derart an, dass dieses in die dritte Ventilstellung gefahren wird. Die Steuereinrichtung 26 steuert die Sperrventile 171, 172 derart an, dass diese in die Sperrposition gefahren werden und ein Eintritt des Reinigungsgases 210 in den Innenraum 90 verhindert wird.

Durch den vierten bis achten Verfahrensschritt 315 bis 335 kann besonders schnell, gründlich und zuverlässig das gefilterte Partikelmaterial 205 aus der Entnahmevorrichtung 15 abgeführt werden, sodass die Entnahmevorrichtung 15 wieder gereinigt und für eine lange Belastungszeit einsatzfähig ist. Dadurch kann die Entnahmevorrichtung 15 nachfolgend auch mit hohem Gasdurchsatz (= hoher Partikelbelastung) ohne Verstopfungsgefahr betrieben werden.

Es wird darauf hingewiesen, dass die Verfahrensschritte 300-340 selbstverständlich in einer anderen Reihenfolge durchgeführt werden können. Die oben beschriebene Reihenfolge ist jedoch die bevorzugte Reihenfolge. Auch können die Sperrventile 171, 172 unabhängig voneinander zwischen der Offenposition und der Sperrposition durch die Steuereinrichtung 26 gesteuert werden, sodass beispielsweise die Filtereinrichtung 35 während des siebten und achten Verfahrensschritts 330, 335 kontinuierlich mit dem Reinigungsgas 210 gespült wird, während hingegen nur für ein kurzes Zeitintervall von beispielsweise 10 Sekunden das Reinigungsgas 210 über das erste Sperrventil 171 und die Ausblasöffnung 185 in den Ringspalt 105 strömt.

Alternativ wäre auch denkbar, dass das Reinigungsgas 210 zeitgleich durch das Blasrohr 110 in die Filtereinrichtung 35 und die Ausblasöffnung 185 geblasen wird. Auch kann der vierte Verfahrensschritt 315 nach einer kurzen Unterbrechung nochmals wiederholt werden, um ein besonders gutes Reinigungsergebnis zu erzielen. Ferner kann auf die Bereitstellung des Reinigungsgases 210 verzichtet werden und beispielsweise mittels eines Schiebers die Abscheidefläche 156 und der Innenraum 90 gereinigt werden.

Durch das oben beschriebene System 10, insbesondere durch den Vorabscheider 40, kann ein Volumen der Entnahmevorrichtung 15 geringgehalten werden, sodass auch mit einer niedrigen Ansauggeschwindigkeit nur ein geringes Totvolumen aus der Entnahmevorrichtung 15 gefördert werden muss, bis das heiße Gas 200 zu der Analyseeinrichtung 20 durch die Gasfördereinrichtung 25 angesaugt ist. Zusätzlich kann die Ansauggeschwindigkeit erhöht werden und dadurch eine weiter verkürzte Ansprechzeit erzielt werden.

Dadurch können eine schnelle Ansprechzeit und eine hohe Verfügbarkeit zur Analyse des heißen Gases 200 bereitgestellt werden. Ein Messen kritischer Gaskomponenten des heißen Gases 200 kann besonders schnell und zuverlässig erfolgen.

Auch muss dazu die Pumpleistung der Förderpumpe 134 nicht notwendigerweise erhöht werden, um eine kurze Ansprechzeit zu erhalten. Durch das geringe Volumen der Entnahmevorrichtung 15 kann gegebenenfalls sogar eine Förderleistung der Förderpumpe 134 gegenüber bekannten Entnahmevorrichtungen gesenkt werden.

Ferner wird zusätzlich ein frühzeitiges Zusetzten der Filtereinrichtung 35 durch den Vorabscheider 40 vermieden, da vorzugsweise ein überwiegender Anteil, beispielsweise mehr als 60 %, an Partikelmaterial 205 durch den Vorabscheider 40 aus dem heißen Gas 200 abgeschieden und gefiltert werden kann. Dies führt dazu, dass ein ungewolltes Verstopfen der Filtereinrichtung 35, insbesondere während des laufenden EAF-Prozesses und/oder des laufenden BOF-Prozesses, vermieden werden kann. Dadurch kann ein langes Aufrechterhalten der Analyse, insbesondere über eine Zykluszeit des BOF-Prozesses, beispielsweise 25 Minuten, vor und nach jeder Schmelze und/oder beim BAF-Prozess zwischen 20 Minuten und einer Stunde je nach Ofengröße und Schrott-Rangierstrategie, sichergestellt werden.

Insbesondere beim BOF-Prozess erhöht das geringe Volumen der Entnahmevorrichtung 15 und die zuverlässige Filterung des Partikelmaterials 205 sowohl durch den Vorabscheider 40 als auch die Filtereinrichtung 35 eine Treffergenauigkeit zur Ermittlung eines Blasstopps auf Basis der von der Analyseeinrichtung 20 bereitgestellten Information. Dadurch wird ein Überblasen der Schmelze im Reaktionsgefäß 70 verhindert. Dadurch kann Sauerstoff und/oder feuerfestes Material, das beim Überblasen verbraucht werden würde, eingespart werden. Zusätzlich wird die Produktionszeit/Zykluszeit pro Schmelze verkürzt.

Eine beim EAF-Prozess durch das oben beschriebene System 10 mögliche präzise Analyse des entnommenen heißen Gases 200 ermöglicht eine Einsparung von Brennersauerstoff oder Methan oder einem anderen Brennstoff, da eine Änderung einer Zusammensetzung des heißen Gases 200 besonders schnell auf Basis der Information der Analyseeinrichtung 20 ermittelt wird.

Ferner wird auch durch die schnelle Analyse des heißen Gases 200 eine feuerfeste Ausmauerung des Reaktionsgefäßes 70 weniger belastet. Ferner wird durch die Nutzung des brennbaren Abgases der EAF-Prozess beschleunigt und durch die Erzeugung von chemischer Energie aus dem Abgas elektrische Energie für den Lichtbogenofen eingespart sowie die Elektroden des Lichtbogenofens weniger verschlissen.

Sowohl für den BOF-Prozess als auch im EAF-Prozess wird durch die schnelle Gasanalyse mittels der Analyseeinrichtung 20 auch eine Sicherheit des Systems 10 erhöht. Insbesondere können beim EAF-Prozess explosionsgefährdete Gasmischungen, beispielsweise bei Eintreten von Ofen-Kühlpanel-Kühlwasser, in den Lichtbogenofen besonders schnell erfasst und erkannt werden, sodass ein nachfolgender, daraus resultierender Schaden, beispielsweise eine Explosion, zuverlässig verhindert werden kann.

Des Weiteren ist eine geometrische Ausgestaltung des Innenraums 90 bzw. des Entnahmegehäuses 30 besonders einfach, sodass die Entnahmevorrichtung 15 besonders einfach und kostengünstig hergestellt werden kann.

Ferner kann eine zweite Kühleinrichtung (nicht in den FIGN 1 bis 3 dargestellt) vorgesehen sein, wobei die zweite Kühleinrichtung beispielsweise thermisch mit der Magnetanordnung 150 gekoppelt ist und im ersten Verfahrensschritt 300 aktiviert wird und über die Verfahrensschritte 300 bis 340 zumindest über den ersten bis dritten Verfahrensschritt 300 bis 310, aktiviert ist. Die zweite Kühleinrichtung kann beispielsweise als Flüssigkeitskühlung ausgebildet sein. Die zweite Kühleinrichtung verhindert eine thermische Beschädigung der Magnetanordnung 150. Alternativ wäre auch eine Ausgestaltung der zweiten Kühleinrichtung als passive Kühlung mit Kühlrippen und Konvektionskühlung denkbar.

FIG 4 zeigt einen Ausschnitt des in FIG 1 gezeigten Systems 10 mit einer Entnahmevorrichtung 15 gemäß einer erfindungsgemäßen Ausführungsform.

Das System 10 ist in FIG 4 im Wesentlichen identisch zu dem in FIGN 1 bis 3 gezeigtem System 10 ausgebildet. Im Folgenden wird ausschließlich auf die Unterscheide des in FIG 4 gezeigten Systems 10 gegenüber dem in den FIGN 1 bis 3 gezeigten System 10 eingegangen.

Die Magnetanordnung 150 weist in Figur 4 als einzigen Magneten 265 einen Elektromagneten 231 auf. Auf einen Spulenkern 235 wird in Figur 4 verzichtet. Die Spule 240 ist in Umfangsrichtung um den Sondenabschnitt 50 gewickelt.

Die Spule 240 ist zylinderförmig gewickelt, sodass die Wicklungen der Spule 240 im Wesentlichen in Umfangsrichtung verlaufen. Bei bestromter Spule 240 erzeugt die Spule 240 das erste Magnetfeld 266. Das erste Magnetfeld 266 ist beispielhaft so ausgerichtet, dass Magnetfeldlinien des ersten Magnetfelds 266 von einer der Zuführöffnung 60 zugewandten Axialseite der Magnetanordnung 150 zur einer der Zuführöffnung 60 abgewandten Axialseite verlaufen.

Dies bewirkt, dass das Gesamtmagnetfeld 155 im Ringspalt 105 im Wesentlichen parallel zu der Strömungsrichtung des heißen Gases 200 bzw. parallel zu der inneren Umfangsseite 100 des Filterabschnitts 55 und der Achse verläuft. Dadurch ist das Gesamtmagnetfeld 155 im Ringspalt 105 in axialer Richtung besonders lang, sodass auch bei hoher Strömungsgeschwindigkeit des heißen Gases 200 durch die zeitlich relativ lang gestaltete Verweildauer des heißen Gases 200 im Ringspalt 105 ein gutes Abscheiden des ersten Anteils des Partikelmaterials 205 im Ringspalt 105 sichergestellt werden kann. Die Abscheidefläche 156 ist in einem Bereich zwischen dem Deckel 56 und einem der Zuführöffnung 60 abgewandten Ende der Spule 240 an der inneren Umfangsseite 100 des Sondenabschnitts 50 angeordnet.

Erfindungsgemäß weist die Entnahmevorrichtung 15 eine weitere Isolierschicht 450 auf, wobei die weitere Isolierschicht 450 außenseitig auf der zweiten äußeren Umfangsseite 136 des Entnahmegehäuses 30 angeordnet ist.

Die weitere Isolierschicht 450 isoliert thermisch das Entnahmegehäuse 30 gegenüber der Magnetanordnung 150. Dadurch wird eine thermische Überhitzung der Magnetanordnung 150 vermieden. Insbesondere wird bei der Ausgestaltung des Magneten 265 als Elektromagnet 231 eine thermische Überlastung eines elektrischen Isolierwerkstoffes des Spulendrahts vermieden.

FIG 5 zeigt eine Schnittansicht entlang einer in FIG 4 gezeigten Schnittebene A-A durch das in FIG 4 gezeigte System 10.

Die Spule 240 ist ringförmig gewickelt. Die Spule 240 umschließt in Umfangsrichtung vollständig das Entnahmegehäuse 30 und die auf dem Sondenabschnitt 50 angeordnete weitere Isolierschicht 450.

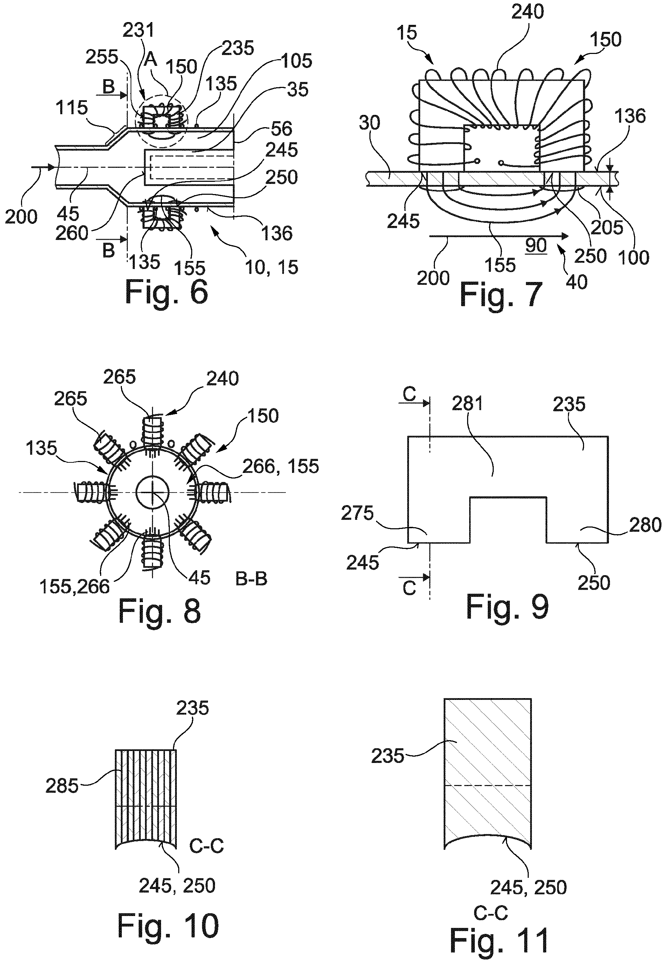

FIG 6 zeigt einen Ausschnitt eines Längsschnitts durch ein System 10 mit einer Entnahmevorrichtung 15 gemäß einer weiteren Ausführungsform.

Die Entnahmevorrichtung 15 ist im Wesentlichen identisch zu den in den FIGN 1 bis 5 gezeigten Entnahmevorrichtungen 15 ausgebildet. Im Folgenden wird ausschließlich auf die Unterschiede der in FIG 6 gezeigten Entnahmevorrichtung 15 gegenüber der in den FIGN 1 bis 5 gezeigten Entnahmevorrichtungen 15 eingegangen.

Der Elektromagnet 231 weist neben der Spule 240 einen Spulenkern 235 auf, um den die Spule 240 gewickelt ist. Der Spulenkern 235 der Magnetanordnung 150 weist im Längsschnitt im Wesentlichen ein U-Profil auf. Verschiedene U-Formen, z. B. auch stark zusammenlaufende Schenkel, sind möglich. Die Magnetanordnung 150 weist eine erste Polfläche 245 und eine zweite Polfläche 250 auf, wobei die erste Polfläche 245 in einer Ebene parallel zur Achse 45 angeordnet ist. Die zweite Polfläche 250 ist in einer weiteren Ebene axial versetzt zur ersten Polfläche 245 angeordnet. Die Polflächen 245, 250 weisen beispielhaft den gleichen minimalen Abstand zu der Achse 45 auf.

Bei bestromter Spule 240 erzeugt die Spule 240 das erste Magnetfeld 266, das an der ersten Polfläche 245 aus der Magnetanordnung 150 austritt. Dabei kann an der ersten Polfläche 245 die Magnetanordnung 150 einen magnetischen Nordpol ausbilden. An der zweiten Polfläche 250 tritt das erste Magnetfeld 266 wieder in die Magnetanordnung 150 ein. An der zweiten Polfläche 250 bildest die Magnetanordnung 150 einen magnetischen Südpol beispielhaft aus.

Dabei liegt mit der ersten Polfläche 245 die Magnetanordnung 150 an der zweiten äußeren Umfangsseite 136 an. Die erste Polfläche 245 kann korrespondierend zu der zweiten äußeren Umfangsseite 136 ausgebildet sein. Die zweite Polfläche 250 ist in Axialrichtung, ebenso wie in FIG 4 erläutert, versetzt zu der ersten Polfläche 245 angeordnet. Die erste Polfläche 245 und die zweite Polfläche 250 sind beispielhaft parallel oder leicht schräg (kleiner 45°) zu der Achse 45 ausgerichtet.

Eine erste Stirnseite 255 der Magnetanordnung 150 ist beispielhaft in einer gemeinsamen Ebene mit einer zweiten Stirnseite 260 der Filtereinrichtung 35 angeordnet. Die erste Stirnseite 255 ist dabei auf einer der Zuführöffnung 60 zugewandten Seite der Magnetanordnung 150 in FIG 6 angeordnet.

Dabei ist die Magnetanordnung 150 in Axialrichtung versetzt zu dem Übergangsabschnitt 115 angeordnet, wobei jedoch ein minimaler Abstand der ersten Stirnseite 255 zum Übergangsabschnitt 115 geringer ist als zum Deckel 56. Dadurch wird durch das Gesamtmagnetfeld 155 Partikelmaterial 205 im heißen Gas 200 beim Eintreten in den Ringspalt 105 ausgefiltert.

Insbesondere ist hierbei auch denkbar, dass die Heizeinrichtung 135 besonders eng gewickelt ist, sodass sichergestellt ist, dass das heiße Gas 200 auf eine Temperatur oberhalb des Siedepunkts von Wasser erhitzt wird. Die Heizeinrichtung 135 ist darüber hinaus derart gewickelt, dass die Heizeinrichtung 135 die Magnetanordnung 150, insbesondere die Spule(n) 240, lokal nicht überhitzt.

FIG 7 zeigt einen in FIG 6 markierten Ausschnitt A der Entnahmevorrichtung 15.

Von besonderem Vorteil ist, wenn die zweite Polfläche 250 stromabwärtsseitig zu der ersten Polfläche 245 angeordnet ist. Dabei ist von besonderem Vorteil, wenn im Innenraum 90 zumindest abschnittsweise eine Strömungsrichtung des heißen Gases 200 parallel zu Magnetfeldlinien des Gesamtmagnetfelds 155 der Magnetanordnung 150 verläuft. Dadurch kann eine besonders gute Wirkung des Vorabscheiders 40 sichergestellt werden. Dabei liegt vorteilhafterweise die erste Polfläche 245 und die zweite Polfläche 250 jeweils flächig an der zweiten äußeren Umfangsseite 136 an, sodass ein Luftspalt zwischen der zweiten äußeren Umfangsseite 136 und der Polfläche 245, 250 vermieden wird. Dadurch ist das Gesamtmagnetfeld 155 in dem Innenraum 90 besonders stark.

In einer Weiterbildung zu der in Figur 7 gezeigten Ausgestaltung kann eine Wandstärke des Entnahmegehäuses 30 radial innenseitig der Polfläche 245, 250 lokal reduziert sein. Durch diese Maßnahme ist die Polfläche 245, 250 näher als in Figur 7 gezeigt zu dem durch den Ringspalt 105 strömenden Gasstrom angeordnet. Auch dadurch ist die Stärke des Gesamtmagnetfelds 155 im Ringspalt 105 gegenüber der in Figur 7 gezeigten Ausgestaltung erhöht.

FIG 8 zeigt eine Schnittansicht entlang einer in FIG 6 gezeigten Schnittebene B-B durch das in den FIGN 6 und 7 gezeigte System 10.

Die Magnetanordnung 150 weist mehrere in Umfangsrichtung versetzt angeordnete Magneten 265 auf, die beispielhaft in regelmäßigem Abstand in Umfangsrichtung zueinander um die Achse 45 herum angeordnet sind. Alternativ wäre auch eine unregelmäßige Anordnung der Magneten 265 denkbar.

Jeder der Magnete 265 ist als Elektromagnet 231 jeweils ausgebildet. In der Ausführungsform ist zwischen zwei in Umfangsrichtung benachbart angeordneten Magneten 265 jeweils ein erster Spalt 270 beispielhaft angeordnet. Durch den ersten Spalt 270 kann die Heizeinrichtung 135 beispielsweise an dem Magneten 265 in Axialrichtung vorbeigeführt werden, sodass zum einen eine zuverlässige Erwärmung des Innenraums 90 durch die Heizeinrichtung 135 sichergestellt ist, zum anderen eine Überhitzung der Magneten 265, insbesondere der Spulen 240, vermieden wird.

Jeder der Magnete 265 stellt jeweils ein erstes Magnetfeld 266 bereit, wobei in dem Innenraum 90 die einzelnen ersten Magnetfelder 266 das Gesamtmagnetfeld 155 gemeinsam ausbilden. Je nach Ausgestaltung des Magneten 265 und beispielsweise eines Abstands in Umfangsrichtung beeinflussen sich die ersten Magnetfelder 266 zur Ausbildung des Gesamtmagnetfelds 155.

FIG 9 zeigt eine Seitenansicht auf den Spulenkern 235 des Magneten 265 der in den FIGN 6 bis 8 gezeigten Magnetanordnung 150.

Der Spulenkern 235 weist zwei Schenkel 275, 280 auf, die in Axialrichtung zueinander versetzt angeordnet sind und über ein in Axialrichtung verlaufendes Joch 281 miteinander verbunden sind. Radial innenseitig weist der erste Schenkel 275 die erste Polfläche 245 und der zweite Schenkel 280 die zweite Polfläche 250 auf. Die Polflächen 245, 250 können gekrümmt ausgebildet, vorzugsweise entlang eines Zylindermantels um die Achse 45 verlaufend ausgebildet sein. Auch ist eine plane Ausgestaltung der Polflächen 245, 250 denkbar.

Die U-förmige Ausgestaltung des Spulenkerns 235 hat den Vorteil, dass zwischen den zwei Schenkeln 275, 280 Heizwendeln der Heizeinrichtung 135 beispielsweise schraubenförmig durchgeführt werden können, sodass ein Überhitzen der Spule 240 durch die Heizeinrichtung 135 vermieden werden kann. Der Spulenkern 235 kann auch anders ausgebildet sein.

Ferner wird ein gleichmäßiges Beheizen der inneren Umfangsseite 100 des Entnahmegehäuses 30 sichergestellt, sodass eine Kondensatbildung innenseitig des Entnahmegehäuses 30 vermieden wird.

Der Spulenkern 235 weist dabei wenigstens einen zweiten Werkstoff auf, wobei der zweite Werkstoff derart gewählt ist, dass zum einen seine Sättigungsmagnetisierbarkeit/Sättigungsinduktion besonders hoch und gleichzeitig seine Bearbeitbarkeit, insbesondere eine Verformbarkeit, bei der der Spulenkern 235 beispielsweise verformt werden kann, ohne dass Risse in den Spulenkern 235 gebracht werden oder sich seine magnetischen Werkstoffeigenschaften stark verändern, sichergestellt sind. Insbesondere ist der zweite Werkstoff auch derart gewählt, dass der Spulenkern 235 besonders leicht zerspanbar, insbesondere fräsbar, ist. Gegebenenfalls kann der Spulenkern 235 schlussgeglüht sein. Der zweite Werkstoff kann beispielsweise weichmagnetische Eigenschaften aufweisen und beispielsweise wenigstens einen der folgenden zweiten Werkstoffe aufweisen: Reineisen, Eisen, Silizium, Nickel, Kobalt, Eisen-Silizium-Legierung, Eisen-Silizium-Legierung gemäß DIN EN 10106, Eisen-Silizium-Legierung gemäß DIN EN 10107, nicht orientierte Eisen-Silizium-Legierung, kernorientierte Eisen-Silizium-Legierung, schlussgeglühte Eisen-Silizium-Legierung, Nickel-Eisen-Legierung.

Durch die weichmagnetischen Eigenschaften des Spulenkerns 235 wird die Aufmagnetisierung des Spulenkerns 235 vermieden oder niedrig gehalten und dadurch wird sichergestellt, dass ein Ablösen, insbesondere ein Abblasen des ersten Anteils an Partikelmaterial 205, bei der Reinigung der Entnahmevorrichtung 15 sichergestellt ist. Dadurch kann auf den fünften Verfahrensschritt 320 verzichtet werden. Auch können dadurch besonders gut mechanische Reinigungsvorgänge, beispielsweise mittels eines Schiebers, erfolgen.

Auch "halb-harte" Werkstoffe können vorteilhaft als Werkstoffe für den Spulenkern 235 verwendet werden, da diese sehr hohe Sättigungsinduktionen bieten. Beispielsweise können halb-harte Werkstoffe eine Eisen-Kobalt Legierung und/oder eine Eisen-Silizium Legierung aufweisen.

Die Spule 240 weist wenigstens einen elektrisch leitenden, gewickelten Spulendraht auf. Der Spulendraht kann Kupfer und/oder Aluminium aufweisen oder einen elektrisch leitfähigen Werkstoff. Der Spulendraht ist mit einer Drahtisolierung versehen, die den Spulendraht elektrisch isoliert. Um einen stabilen Langzeitbetrieb der Entnahmevorrichtung 15 zu gewährleisten, weist die Drahtisolierung wenigstens einen der folgenden dritten Werkstoffe auf: Elastomer, Silikonkautschuk, Keramik, Glasfaser, Thermoplast, Lack, PTFE, VDE 2G. Der Spulendraht kann beispielsweise 0,5 mm im Durchmesser stark sein und mit einer Doppellackisolierung als Drahtisolierung versehen sein, sodass die Spule bis 210°C temperaturbeständig ist. Alternativ kann der Spulendraht mit einer Schlauchisolierung, beispielsweise aus PTFE, als Drahtisolierung versehen sein, die den Spulendraht ummantelt. Dadurch ist die Spule 240 bis 260°C temperaturstabil.

FIG 10 zeigt eine Schnittansicht entlang einer in FIG 9 gezeigten Schnittebene C-C durch den Spulenkern 235.

In der Ausführungsform ist beispielhaft der Spulenkern 235 aus mehreren Kernelementen 285 gebaut, die lamellenförmig ausgebildet sind und im Wesentlichen die gleiche Dicke aufweisen. Dadurch kann der Spulenkern 235 kostengünstig aus Blech hergestellt werden, da geeignete Kernwerkstoffe in Blechform angeboten werden. Auch können bei einem aus vielen Blechlagen gebauten Magnetkern im Vergleich zu einem in den Abmessungen gleichen Magnetkern aus Vollmaterial die Wirbelstromverluste magnetischer Wechselfelder stark gesenkt werden. Von besonderem Vorteil ist hierbei, wenn jedes Kernelement 285 eine Dicke beispielsweise von 0,05 mm bis 0,5 mm aufweist.

Bei der gebauten mehrteiligen Ausgestaltung des Spulenkerns 235 ist von besonderem Vorteil, wenn alle Kernelemente 285 derart zum Spulenkern 235 montiert sind, dass die Kernelemente 285 die gleiche Walzrichtung und somit eine gleiche Kristallorientierung aufweisen. Dadurch weist der Spulenkern 235 besonders gute magnetische Eigenschaften auf. Insbesondere ist nur eine geringe Stromstärke für die Spule 240 notwendig, um das Restmagnetfeld des Spulenkerns 235 im fünften Verfahrensschritt 320 aufzuheben. Auch wird eine hohe magnetische Flussdichte bei Erzeugung des Gesamtmagnetfelds 155 durch die Spule 240 sichergestellt.

FIG 11 zeigt eine Schnittansicht entlang der in FIG 9 gezeigten Schnittebene C-C durch eine Weiterbildung des in FIG 9 gezeigten Spulenkerns 235.

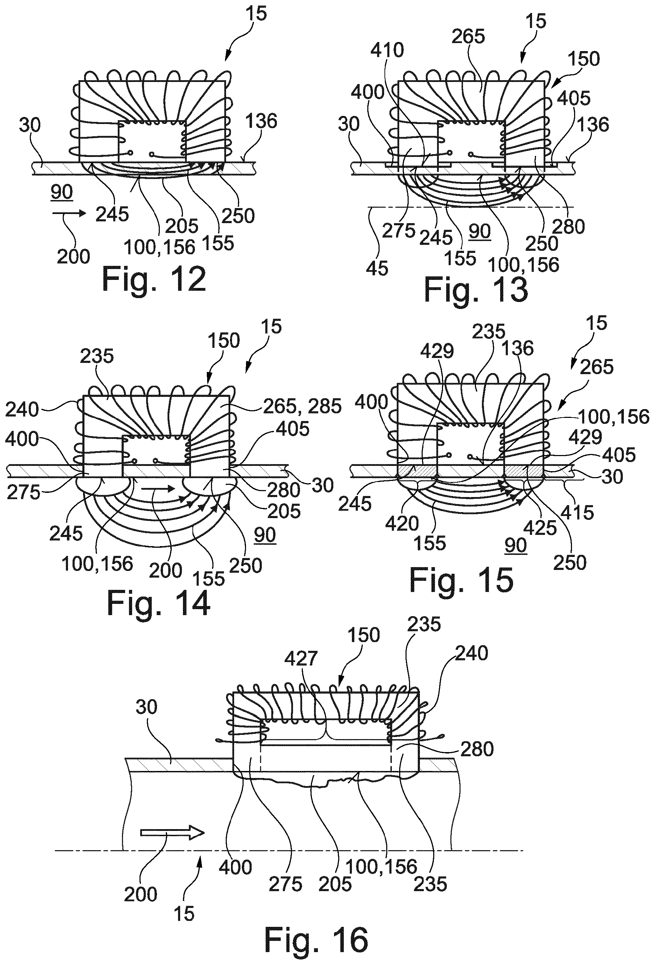

Der Spulenkern 235 ist in FIG 11 einstückig und materialeinheitlich ausgebildet. Der Vorteil liegt hier in der relativ freien Formgebung des Spulenkerns 235 auch bei kleinen Stückzahlen (durch z.B. Fräsen), bei der die Herstellung von Stanzformen aufwändig wäre. Von besonderem Vorteil ist, wenn der Spulenkern 235 als dritten Werkstoff Weicheisen aufweist, da dieses besonders gut geeignet ist, um die Polflächen 245, 250 spanend zu bearbeiten. Die Spulenkerne 235 können ebenfalls magnetisch "halb-harte" Werkstoffe, wie z. B. Fe-Co, und/oder eine Fe-Si Legierungen aufweisen. FIG 12 zeigt einen Ausschnitt eines Längsschnitts durch eine Entnahmevorrichtung 15 gemäß einer weiteren Ausführungsform.

Die Entnahmevorrichtung 15 ist im Wesentlichen identisch zu der in den FIGN 1 bis 11 erläuterten Entnahmevorrichtung 15, insbesondere der in den FIGN 6 bis 11 gezeigten Entnahmevorrichtung 15, ausgebildet. Im Folgenden wird ausschließlich auf die Unterschiede der in FIG 12 gezeigten Entnahmevorrichtung 15 gegenüber der in den FIGN 6 bis 10 gezeigten Ausführungsform der Entnahmevorrichtung 15 eingegangen.

In der in FIG 12 gezeigten Ausführungsform weist das Entnahmegehäuse 30 einen ferritischen und/oder einen ferromagnetischen ersten Werkstoff auf. Diese Ausgestaltung hat den Vorteil, dass das Gesamtmagnetfeld 155 in dem Entnahmegehäuse 30 geführt wird und oberflächennah im Wesentlichen parallel zu der inneren Umfangsseite 100 im Innenraum 90 verläuft. Strömt das heiße Gas 200 innenseitig an der inneren Umfangsseite 100 entlang und kommt in den Wirkbereich des Gesamtmagnetfelds 155, so lagert sich an der Abscheidefläche 156 der erste Anteil an Partikelmaterial 205 an. Die Anlagerung erfolgt dabei im Wesentlichen in Axialrichtung zwischen den beiden Polflächen 245, 250. Diese Ausgestaltung hat den Vorteil, dass anstatt der in den FIGN 7 bis 10 gezeigten Anlagerung jeweils radial innenseitig der ersten Polfläche 245 und der zweiten Polfläche 250 die Anlagerung von Partikelmaterial 205 nur in einem Bereich an der inneren Abscheidefläche 156 erfolgt. Dadurch kann eine gezielte erleichterte Reinigung erfolgen. Außerdem ist die Fläche des Bereichs größer und es kann damit auch sonst bei den Polflächen 245 oder 250 vorbeiströmender Staub eingefangen werden.

Das Entnahmegehäuse 30 kann im Wesentlichen vollständig aus ferritischem, vorzugsweise ferritisch nicht rostendem Stahl als ersten Werkstoff gefertigt sein. Auch kann nur ein Teilabschnitt, zum Beispiel der Filterabschnitt 55 und/oder ein ringförmiger Abschnitt, der radial innenseitig der Magnetanordnung 150 angeordnet ist, den ferritischem, vorzugsweise ferritisch nicht rostendem Stahl als ersten Werkstoff aufweisen.

FIG 13 zeigt einen Ausschnitt einer Entnahmevorrichtung 15 gemäß einer weiteren Ausführungsform.

Die Entnahmevorrichtung 15 ist im Wesentlichen identisch zu der in den FIGN 1 bis 12 erläuterten Entnahmevorrichtung 15 ausgebildet. Im Folgenden wird ausschließlich auf die Unterschiede der in FIG 13 gezeigten Entnahmevorrichtung 15 gegenüber der in den FIGN 6 bis 10 gezeigten Entnahmevorrichtungen 15 eingegangen.

Das Entnahmegehäuse 30 weist zusätzlich wenigstens eine erste Ausnehmung 400 und wenigstens eine in Axialrichtung versetzt zu der ersten Ausnehmung 400 angeordnete zweite Ausnehmung 405 auf. Die Ausnehmungen 400, 405 sind an der zweiten äußeren Umfangsseite 136 des Entnahmegehäuses 30 angeordnet und erstrecken sich in Richtung des Innenraums 90. Dabei können die Ausnehmungen 400, 405 nutartig ausgebildet sein. Die Ausnehmung 400, 405 kann dabei als Teilringspalt in dem Entnahmegehäuse 30 ausgebildet sein. Die Ausnehmungen 400, 405 können am Filterabschnitt 55, Übergangsabschnitt 115 und/oder am Sondenabschnitt 50 positioniert sein, wobei die Ausnehmungen 400, 405 in FIG 13 im Filterabschnitt 55 angeordnet sind. Die Ausnehmungen 400, 405 können sich über ein Winkelsegment erstrecken und korrespondierend zu jeweils einem Schenkel 275, 280 ausgebildet ein. Auch können die Ausnehmungen 400, 405 vollständig umlaufend um die Achse 45 ausgebildet sein und zu einer einzigen, breiten Nut zusammengefasst sein. Dadurch sind die erste und zweite Ausnehmung 400, 405 zu einer gemeinsamen Ausnehmung zusammengefasst, die nutförmig ausgebildet ist.

Dabei weist jede der Ausnehmungen 400, 405 einen Ausnehmungsgrund 410 auf. Der Ausnehmungsgrund 410 kann beispielsweise entlang eines Zylindermantels um die Achse 45 verlaufend angeordnet sein. Von besonderem Vorteil ist, wenn das Entnahmegehäuse 30 in der in FIG 13 gezeigten Ausgestaltung einen ersten paramagnetischen Werkstoff aufweist. Die Magnetanordnung 150 greift beispielsweise mittels des ersten Schenkels 275 in die erste Ausnehmung 400 und mittels des zweiten Schenkels 280 in die zweite Ausnehmung 405 ein. Dabei liegt die erste Polfläche 245 und die zweite Polfläche 250 jeweils an dem Ausnehmungsgrund 410 vorzugsweise flächig an. Diese Ausgestaltung hat den Vorteil, dass ein Abstand der Polfläche 245, 250 zu der Abscheidefläche 156 gegenüber der in den FIGN 1 bis 12 gezeigten Ausgestaltung reduziert ist, sodass das Gesamtmagnetfeld 155 in dem Innenraum 90 besonders stark ist.

FIG 14 zeigt einen Ausschnitt einer Schnittansicht durch eine Entnahmevorrichtung 15 gemäß einer nicht mit der Erfindung kombinierbaren Abwandlung.

FIG 15 zeigt einen Ausschnitt einer Schnittansicht durch eine Entnahmevorrichtung 15 gemäß einer weiteren Ausführungsform.

Das Entnahmegehäuse 30 weist einen ersten Gehäusebereich 415 und wenigstens einen zweiten Gehäusebereich 420 auf. Zusätzlich kann das Entnahmegehäuse 30 einen dritten Gehäusebereich 425 aufweisen. Der erste Gehäusebereich 415 kann beispielsweise sich über einen Teilbereich des Entnahmegehäuses 30 erstrecken und beispielsweise in dem Filterabschnitt 55 und/oder dem Übergangsabschnitt 115 und/oder dem Sondenabschnitt 50 angeordnet sein und/oder sich über wenigstens einen dieser Abschnitte 50, 55, 115 erstrecken.

Der erste Gehäusebereich 415 weist als ersten Werkstoff paramagnetisches Material auf. Der zweite Gehäusebereich 420 verschließt die erste Ausnehmung 400 und ist als Einsatz in die erste Ausnehmung 400 ausgebildet. Dabei kann der zweite Gehäusebereich 420 die gleiche Wandstärke (in radialer Richtung) aufweisen wie der erste Gehäusebereich 415. Der zweite Gehäusebereich 420 kann beispielsweise stoffschlüssig mit dem ersten Gehäusebereich 415 verbunden sein. Insbesondere kann der zweite Gehäusebereich 420 in die erste Ausnehmung 400 eingeklebt und/oder eingeschweißt oder eingepresst oder eingeschraubt sein.

Außenseitig liegt die erste Polfläche 245 an dem zweiten Gehäusebereich 420, vorteilhafterweise spaltfrei, an. In der Ausführungsform entspricht beispielhaft eine Kontur der ersten Ausnehmung 400 einer äußeren Kontur des ersten Schenkels 275. Alternativ kann die Kontur der ersten Ausnehmung 400 größer gewählt sein als die äußere Kontur des ersten Schenkels 275. Der Magnet 265 kann mit einer kraftschlüssigen oder stoffschlüssigen Verbindung 429 an der zweiten äußeren Umfangsseite 136 des zweiten Gehäusebereichs 420 befestigt sein. Als stoffschlüssige Verbindung 429 eignet sich insbesondere eine Kleb- und/oder Schweißverbindung.

Der dritte Gehäusebereich 425 verschließt analog zum zweiten Gehäusebereich 420 die zweite Ausnehmung 405 und ist als weiterer Einsatz in die zweite Ausnehmung 405 ausgebildet. Dabei ist der dritte Gehäusebereich 425 korrespondierend zu der zweiten Ausnehmung 405 ausgebildet und weist die gleiche Wandstärke wie der erste Gehäusebereich 415 in radialer Richtung auf. Auch der dritte Gehäusebereich 425 kann in der zweiten Ausnehmung 405 stoffschlüssig und/oder formschlüssig befestigt sein. Insbesondere kann beispielsweise der dritte Gehäusebereich 425 mit dem ersten Gehäusebereich 415 verschweißt oder verklebt oder verpresst oder verschraubt sein. Außenseitig liegt die zweite Polfläche 250 an dem dritten Gehäusebereich 425 vorteilhafterweise spaltfrei an und ist vorzugsweise mittels der stoffschlüssigen Verbindung 429 mit dem ersten und/oder dritten Gehäusebereich 415, 425 verbunden. In einer Weiterbildung kann angrenzend an die erste und/oder zweite Polfläche 245, 250 der Magnet 265 mit dem ersten Gehäusebereich 415 verbunden sein.

Zusätzlich oder alternativ zu der stoffschlüssigen Verbindung 429 könnte mittels einer kraftschlüssigen Verbindung die Polfläche 245, 250 mit dem Entnahmegehäuse 30, insbesondere mit dem zweiten und/oder dritten Gehäusebereich 420,425, verbunden sein. Diese kann beispielsweise dadurch ausgebildet sein, dass die Polfläche 245, 250 an das Entnahmegehäuse 30, insbesondere an den zweiten und/oder dritten Gehäusebereich 420, 425, durch eine Hilfskonstruktionen angepresst wird.

Alternativ könnte der zweite und/oder dritte Gehäusebereich 420, 425 eine andere Wandstärke (kleiner oder größer) als der erste Gehäusebereich 415 aufweisen.

Von besonderem Vorteil ist, wenn der zweite und dritte Gehäusebereich 420, 425 einen ferromagnetischen und/oder ferritischen weiteren Werkstoff aufweist. Diese Ausgestaltung hat den Vorteil, dass in Verbindung mit dem paramagnetischen ersten Werkstoff des ersten Gehäusebereichs 415 das jeweilige erste Magnetfeld 266 der Magnete 265 über den zweiten Gehäusebereich 420 in den Innenraum 90 des Entnahmegehäuses 30 mit geringem Magnetfeldverlust (hoher Felddichte) geleitet wird. Dort tritt das erste Magnetfeld 266 aus dem zweiten Gehäusebereich 420 jeweils innenseitig aus und bildet mit den ersten Magnetfeldern 266 der anderen Magnete 265 das Gesamtmagnetfeld 155 im Innenraum 90 aus. Das Gesamtmagnetfeld 155 verläuft (wie in FIG 15 mittels Magnetfeldlinien dargestellt) zu dem dritten Gehäusebereich 425. Am dritten Gehäusebereich 425 tritt das erste Magnetfeld 266 in den dritten Gehäusebereich 425 ein und wird an die zweite Polfläche 250 durch den ferromagnetischen und/oder ferritischen weiteren Werkstoff des dritten Gehäusebereichs 425 mit geringem Magnetfeldverlust weitergeleitet. Diese Ausgestaltung hat den Vorteil, dass das Gesamtmagnetfeld 155 im Innenraum 90 stärker als in FIG 13 erläutert ausgebildet ist.

Ferner hat die Ausgestaltung den Vorteil, dass durch die verschiedenen Gehäusebereiche 415, 420, 425 das Entnahmegehäuse 30 besonders gut vorgefertigt werden kann. Dadurch ist die Montage der Entnahmevorrichtung 15 besonders einfach und kostengünstig. Des Weiteren wird durch diese Bauart die Bildung von Rissen/Undichtheiten an der Ausnehmung 400, 405 (Figur 14) minimiert, da der Spulenkern 235 vom Entnahmegehäuse 30 entkoppelt wird. Durch eine solche Entkopplung (beispielsweise durch nur kraftschlüssige Verbindung des Spulenkerns 235 zu dem zweiten bzw. dritten Gehäusebereich 420, 425) können unterschiedliche thermischen Wärmedehnungen von Komponenten der Entnahmeeinrichtung 15 kompensiert werden.

Um eine elektrochemische Korrosion der Entnahmevorrichtung 15 zu verhindern, ist von besonderem Vorteil, wenn, insbesondere bei Ausgestaltung des Magneten 265 als Elektromagnet 231, der zweite Werkstoff des Spulenkerns 235 identisch zu dem ferritischen oder ferromagnetischen weiteren Werkstoff des zweiten und/oder dritten Gehäusebereichs 420, 425 ist.

Von besonderem Vorteil (aber nicht zwingend) ist des Weiteren, wenn der zweite und dritte Gehäusebereich 420, 425 im Wesentlichen eine gleiche Kernorientierungsrichtung aufweist wie der Spulenkern 235.

In einer Weiterbildung wird vorgeschlagen, dass der zweite und/oder dritte Gehäusebereich 420, 425 kalt in die jeweils zugeordnete Ausnehmung 400, 405 eingepresst/eingeschrumpft wird. Auch ein Einkleben des zweiten und/oder dritten Gehäusebereichs 420, 425 in die jeweils zugeordnete Ausnehmung 400, 405 eignet sich besonders gut, um eine Beschädigung Weißscher Bezirke des zweiten und/oder dritten Gehäusebereichs 420, 425 zu verhindern. Auch ein Schweißen ist möglich, die wärmebeeinflusste Zone soll aber möglichst geringgehalten werden.

Auch wäre denkbar, den zweiten und/oder dritten Gehäusebereich 420, 425 vor dem Einpressen beispielsweise auf unter -50 °C abzukühlen. Die in FIG 15 gezeigte Ausgestaltung hat den Vorteil, dass ein ungestörter Verlauf magnetischer Feldlinien des jeweils ersten Magnetfelds 266 des Magneten 265 bis zur ersten inneren Umfangsseite 100 und der Abscheidefläche 156 zur Ausbildung des Gesamtmagnetfelds 155 im Innenraum 90 sichergestellt ist. Dadurch wird eine besonders gute Filterwirkung des Vorabscheiders 40 sichergestellt. Dadurch weist die in FIG 15 gezeigte Ausgestaltung der Entnahmevorrichtung 15 bei gleicher Stärke des Magneten 265 eine bessere Filterwirkung auf als die in FIG 13 gezeigte Ausgestaltung.

FIG 16 zeigt einen Ausschnitt eines Längsschnitts durch eine Entnahmevorrichtung 15 gemäß einer nicht mit der Erfindung kombinierbaren Abwandlung.

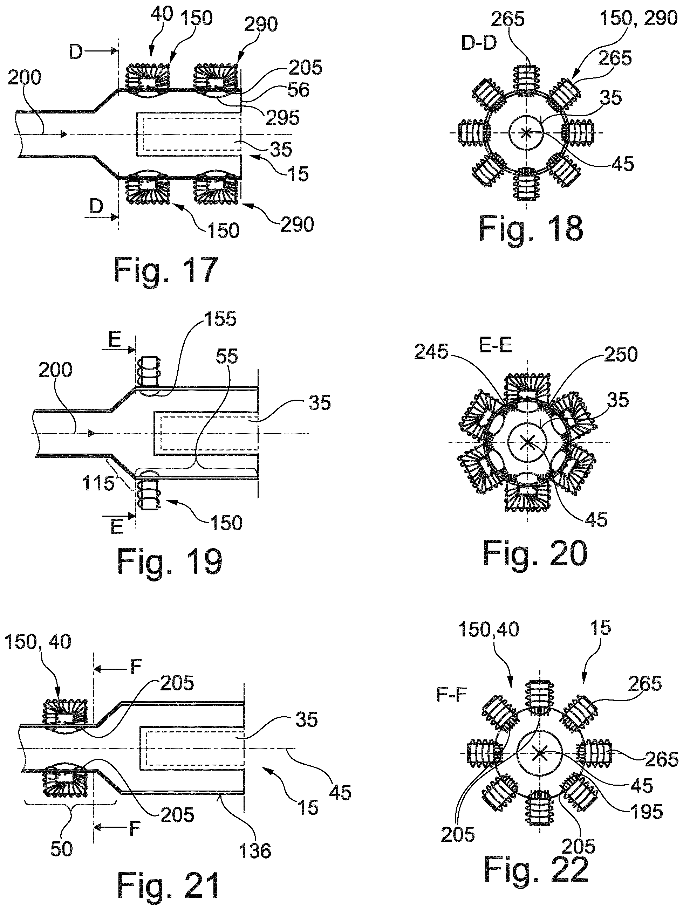

FIG 17 zeigt einen Ausschnitt eines Längsschnitts durch eine Entnahmevorrichtung 15 gemäß einer weiteren Ausführungsform.

Die in FIG 17 gezeigte Entnahmevorrichtung 15 ist im Wesentlichen identisch zu der in FIGN 1 bis 11, insbesondere der in den FIGN 6 bis 10, erläuterten Entnahmevorrichtung 15 ausgebildet. Im Folgenden wird nur auf die Unterschiede der in FIG 17 gezeigten Entnahmevorrichtung 15 gegenüber der in den FIGN 6 bis 10 gezeigten Ausführungsform der Entnahmevorrichtung 15 eingegangen.

Der Vorabscheider 40 weist zusätzlich eine weitere Magnetanordnung 290 auf, wobei die weitere Magnetanordnung 290 identisch zu der Magnetanordnung 150 ausgebildet ist. Die weitere Magnetanordnung 290 ist in axialer Richtung zwischen der Magnetanordnung 150 und dem Deckel 56 angeordnet. Die weitere Magnetanordnung 290 stellt ein weiteres Gesamtmagnetfeld 295 bereit. Die Funktionsweise der weiteren Magnetanordnung 290 ist identisch zu der Magnetanordnung 150.

Die weiteren Magnetanordnung 290 hat den Vorteil, dass in einem strömungstechnisch beruhigten Bereich (axial vor dem Deckel 56) mittels des weiteren Gesamtmagnetfelds 295 gegenüber der in FIGN 6 bis 10 gezeigten Ausgestaltung zusätzlich ein dritter Anteil an Partikelmaterial 205 aus dem heißen Gas 200 abgeschieden wird, sodass das heiße Gas 200 mit einer besonders geringen Konzentration von Partikelmaterial 205 in die Filtereinrichtung 35 einströmt und dadurch die Filtereinrichtung 35 erst besonders spät mit Partikelmaterial 205 zusetzt. Dadurch wird eine besonders lange Zykluszeit und/oder hohe Ansauggeschwindigkeit des zu analysierenden heißen Gases 200 für die Entnahmevorrichtung 15 erzielt.

FIG 18 zeigt eine Schnittansicht entlang einer in FIG 17 gezeigten Schnittebene D-D durch die in FIG 17 gezeigte Ausführungsform der Entnahmevorrichtung 15.

Die Magneten 265 der Magnetanordnungen 150, 290 sind in Axialrichtung überdeckend angeordnet. Dabei wird unter einer axialen Überdeckung verstanden, dass bei einer Projektion in axialer Richtung in eine Ebene, die senkrecht zu der Achse 45 ausgerichtet ist, sich in der Projektionsebene die Magneten 265 überdecken. Auch wäre denkbar, dass die weitere Magnetanordnung 290 gegenüber der Magnetanordnung 150 in Umfangsrichtung verdreht angeordnet ist.

FIG 19 zeigt einen Ausschnitt eines Längsschnitts durch eine Entnahmevorrichtung 15 gemäß einer weiteren Ausführungsform.

Die Entnahmevorrichtung 15 ist im Wesentlichen identisch zu der in den FIGN 1 bis 11, 17 und 18 gezeigten Ausführungsformen, insbesondere zu der in den FIGN 6 bis 10 gezeigten Ausführungsform der Entnahmevorrichtung 15 ausgestaltet. Im Folgenden wird ausschließlich auf die Unterschiede der in FIG 19 gezeigten Ausführungsform gegenüber der in den FIGN 6 bis 10 gezeigten Ausführungsformen eingegangen.

Die Magnetanordnung 150 ist im Wesentlichen angrenzend an den Übergangsabschnitt 115 angeordnet. Die Magnetanordnung 150 ist in Axialrichtung besonders schlank ausgebildet, sodass beispielhaft im Wesentlichen die Magnetanordnung 150 in Axialrichtung zwischen einem Ende der Filtereinrichtung 35 und dem Übergangsabschnitt 115 sich erstreckt. Dadurch durchdringt das Gesamtmagnetfeld 155 den Innenraum 90 in einem Bereich, in dem das heiße Gas 200 - aufgrund des relativ großen Strömungsquerschnitts und eines sich evtl. nach dem Übergangsabschnitt 115 strömungstechnisch einstellenden Wirbels - mit besonders geringer Geschwindigkeit strömt.

FIG 20 zeigt eine Schnittansicht entlang einer in FIG 19 gezeigten Schnittebene E-E durch die in FIG 19 gezeigte Entnahmevorrichtung 15.

Gegenüber der in den FIGN 1 bis 18 gezeigten Orientierung der Magnete 265 ist die Ausrichtung der Magnete 265 in den FIGN 19 und 20 beispielhaft um 90° gedreht, sodass die Polflächen 245, 250 zu der Achse 45 jeweils in einer gemeinsamen Ebene, die senkrecht zu der Achse 45 ausgerichtet ist und somit die Achse 45 auf einem normalen Vektor der Ebene liegt, angeordnet sind. Diese Ausgestaltung hat den Vorteil, dass auch bei besonders engem axialem Bauraum der Vorabscheider 40 in die Entnahmevorrichtung 15 integriert werden kann. Außerdem kann durch diese Anordnung eine besonders große Anzahl von Polflächen 245, 250, die neben einem langsamen Strömungsbereich des heißen Gases 200 angeordnet sind, bereitgestellt werden, wodurch sich eine hohe Abscheiderate des ersten Anteils an Partikelmaterial 205 durch eine lange Verweildauer des Partikelmaterials 205 im Gesamtmagnetfeld 155 ergibt.

FIG 21 zeigt einen Ausschnitt eines Längsschnitts durch eine Entnahmevorrichtung 15 gemäß einer weiteren Ausführungsform.

Die Entnahmevorrichtung 15 ist im Wesentlichen identisch zu der in den vorhergehenden FIGN, insbesondere zu der in den FIGN 6 bis 10 erläuterten Ausführungsformen der Entnahmevorrichtung 15. Abweichend dazu ist die Magnetanordnung 150 am Sondenabschnitt 50 angeordnet und befestigt. Diese Ausgestaltung hat den Vorteil, dass die Entnahmevorrichtung 15 in radialer Richtung bezogen auf die Achse 45 besonders schlank ausgebildet ist.

FIG 22 zeigt eine Schnittansicht entlang einer in FIG 21 gezeigten Schnittebene F-F.

FIG 22 ist vergrößert gegenüber FIG 21 dargestellt. Durch die geringere radiale Erstreckung des Sondenabschnitts 50 gegenüber dem Filterabschnitt 55 kann die Anzahl der Magnete 265 der Magnetanordnung 150 gegenüber der in den FIGN 1 bis 20 gezeigten Ausgestaltung reduziert sein oder sind in radialer Richtung kleiner ausgebildet, sodass die Entnahmevorrichtung 15 besonders kostengünstig ausgebildet ist. Außerdem kann das Gesamtmagnetfeld 155 vollständig den Innenraum 90 in radialer Richtung durchdringen. Die Magnete 265 können sowohl in axialer Richtung wie in den FIGN 6 bis 10 gezeigt ausgerichtet sein. Auch kann entgegen der in FIG 22 gezeigten Ausgestaltung die Ausrichtung der Magnete 265 wie in den FIGN 19 und 20 gezeigt gewählt werden.

Auch wäre denkbar, die in FIG 21 und 22 gezeigte Ausgestaltung der Entnahmevorrichtung 15 mit einer der in den vorangegangen FIGN gezeigten Ausführungsform zu kombinieren. Dadurch würde die Abscheidewirkung des Vorabscheiders 40 weiter verstärkt werden, sodass besonders viel Partikelmaterial 205 aus dem heißen Gas 200 abgeschieden werden kann, bevor das heiße Gas 200 an der Abscheidefläche 156 in die Filtereinrichtung 35 eindringt.

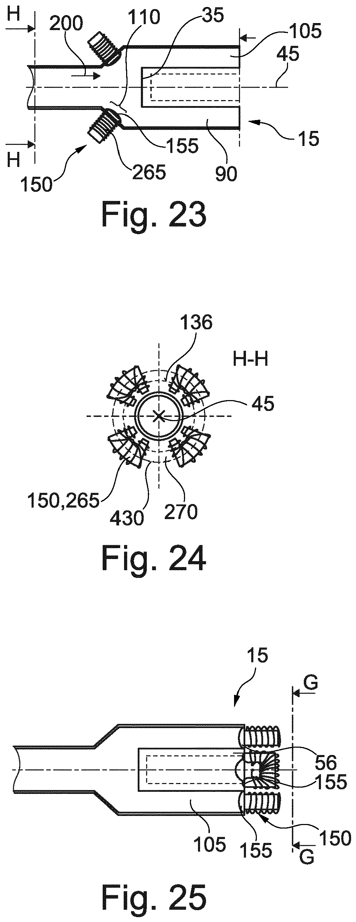

FIG 23 zeigt einen Längsschnitt durch eine Entnahmevorrichtung 15 gemäß einer weiteren Ausführungsform.

Die Entnahmevorrichtung 15 ist im Wesentlichen identisch zu der in FIG 19 und 20 erläuterten Entnahmevorrichtung 15 ausgebildet, wobei jedoch im Folgenden ausschließlich auf die Unterschiede der in FIG 23 gezeigten Ausführungsform gegenüber der in den FIGN 19 und 20 gezeigten Ausführungsform eingegangen wird.

Die Magnetanordnung 150 ist in der in FIG 23 gezeigten Ausführungsform außenseitig an dem Übergangsabschnitt 115 angeordnet, sodass die Magnete 265 der Magnetanordnung 150 schräg zu der Achse 45 ausgerichtet sind. Durch die Anordnung der Magnetanordnungen 150 am Übergangsabschnitt 115 wirkt das Gesamtmagnetfeld 155 im Bereich zwischen der Zuführöffnung 60 und einem Ende der Filtereinrichtung 35. In diesem Bereich verläuft die Strömung des heißen Gases 200 mit geringer Strömungsgeschwindigkeit, sodass für das Gesamtmagnetfeld 155 besonders viel Zeit herrscht, um Partikelmaterial 205 aus dem heißen Gas 200 anzuziehen und den ersten Anteil an Partikelmaterial 205 aus dem heißen Gas 200 abzuscheiden.

FIG 24 zeigt eine Schnittansicht durch die in FIG 23 gezeigte Entnahmevorrichtung 15 entlang einer in FIG 23 gezeigten Schnittebene H-H.

Die Magnete 265 der Magnetanordnung 150 sind beispielhaft entlang eines Zylindermantels 430 um die Achse 45 verlaufend angeordnet. Dabei bedeckt jeweils je ein Magnet 265 ein Winkelsegment. In Umfangsrichtung sind die Magnete 265 durch den ersten Spalt 270 beabstandet zueinander angeordnet. Jeder der Spulenkerne 235 ist beispielhaft in seiner U-förmigen Ausgestaltung teilbogenförmig ausgebildet. Dadurch ist ein radialer Bauraumbedarf gegenüber der in den FIGN 19 und 20 gezeigten Ausführungsform reduziert. Gleichzeitig kann die Heizeinrichtung 135, wie oben erläutert, zwischen den Magneten 265 im ersten Spalt 270 durchgeführt werden, sodass auch eine Beheizung des Übergangsabschnitts 115 des Entnahmegehäuses 30 sichergestellt ist.

FIG 25 zeigt einen Ausschnitt eines Längsschnitts durch eine Entnahmevorrichtung 15 gemäß einer weiteren Ausführungsform.

Die Entnahmevorrichtung 15 ist im Wesentlichen identisch zu der in den vorangegangenen FIGN, insbesondere im Wesentlichen identisch zu der in den FIGN 19 und 20 erläuterten Entnahmevorrichtung 15, ausgebildet. Im Folgenden wird ausschließlich auf die Unterschiede der in FIG 25 gezeigten Entnahmevorrichtung 15 gegenüber der in den FIGN 19 und 20 gezeigten Ausgestaltung der Entnahmevorrichtung 15 eingegangen.

In der Ausführungsform ist beispielhaft die Magnetanordnung 150 an dem Deckel 56 befestigt. Dabei kann die Magnetanordnung 150 außenseitig am Deckel 56 angeordnet sein, wobei das Gesamtmagnetfeld 155 der Magnetanordnung 150 in axialer Richtung sich an den Deckel 56 anschließt und den Ringspalt 105 axial angrenzend an den Deckel 56 durchdringt.

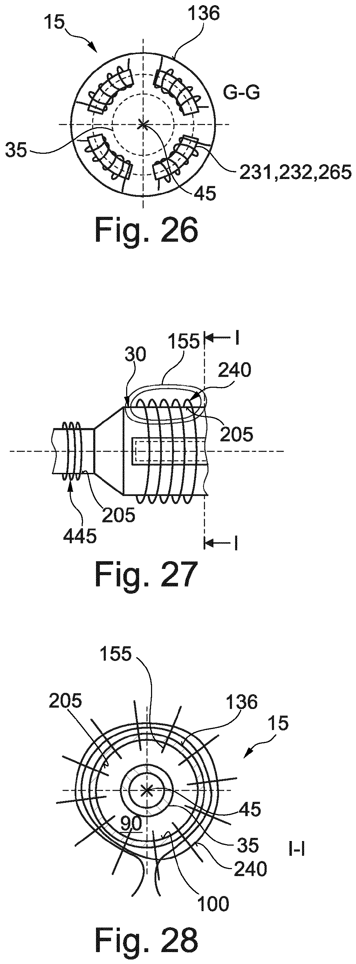

FIG 26 zeigt eine Seitenansicht entlang einer in FIG 25 gezeigten Schnittebene G-G durch die in FIG 25 gezeigte Entnahmevorrichtung 15.

Die Magnete 265 sind dabei kreisförmig um die Achse 45 verlaufend angeordnet. Dabei liegt die erste und zweite Polfläche 245, 250 außenseitig stirnseitig an dem Deckel 56 an.

FIG 27 zeigt einen Ausschnitt eines Längsschnitts durch eine Entnahmevorrichtung 15 gemäß einer vierzehnten Ausführungsform.

Die Entnahmevorrichtung 15 in FIG 27 ist im Wesentlichen eine Kombination der in FIG 4 sowie 21 und 22 gezeigten Ausführungsformen der Entnahmevorrichtung 15.

In der in FIG 27 gezeigten Ausführungsform wird bei dem Magneten 265 auf den Spulenkern 235 verzichtet und das erste Magnetfeld 266 rein durch eine kernlose Spule 240 erzeugt. Es können entlang des Entnahmegehäuses 30 auch mehrere voneinander unabhängige Spulen 240 angebracht werden. Die Spule 240 ist als Ringspule vollständig umlaufend um den Filterabschnitt 55 das Entnahmegehäuses 30 ausgebildet. Auch an dem Sondenabschnitt 50 ist eine weitere Spule 445 angeordnet, die als Ringspule ausgebildet sein kann.

FIG 28 zeigt eine Schnittansicht entlang einer in FIG 27 gezeigten Schnittebene I-I durch die in FIG 27 gezeigte Entnahmevorrichtung 15.

Die Spule 240 ist als Ringspule entlang eines Zylindermantels um die Achse 45 verlaufend ausgebildet. Die Spule 240 ist derart ausgerichtet, dass das erste Magnetfeld 266 zur Ausbildung des Gesamtmagnetfelds 155 in das Innere des Entnahmegehäuses 30 eintritt und sich in Axialrichtung im Innenraum 90 im Wesentlichen erstreckt.

Diese Ausgestaltung ist in radialer Richtung besonders kompakt und weist eine besonders gute Filterwirkung des Vorabscheiders 40 auf.

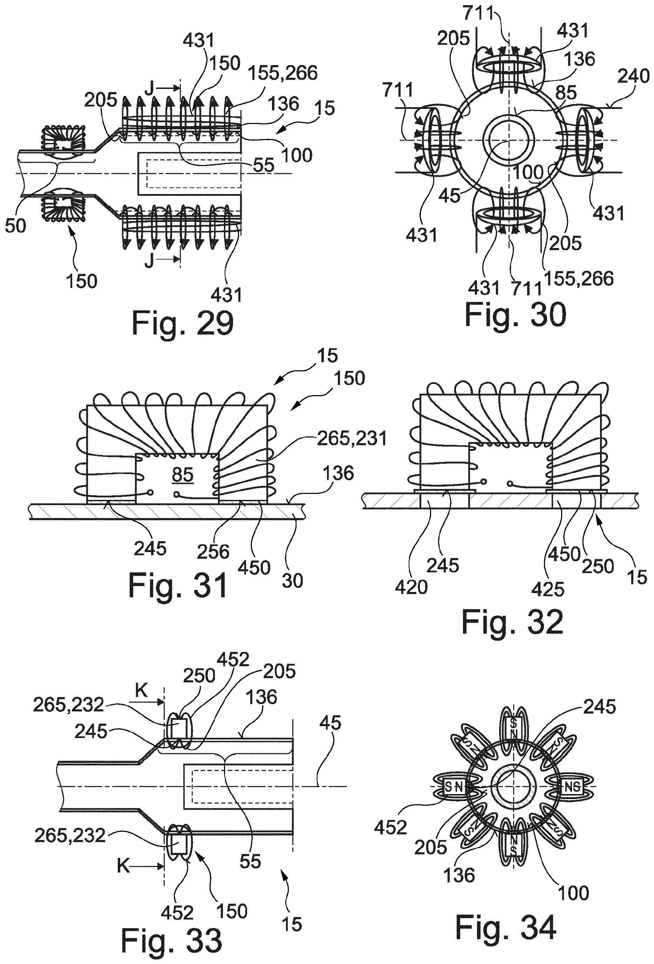

FIG 29 zeigt einen Ausschnitt eines Längsschnitts durch eine Entnahmevorrichtung 15 gemäß einer weiteren Ausführungsform.

Die Entnahmevorrichtung 15 ist im Wesentlichen eine Weiterbildung der in FIG 27 und 28 gezeigten Ausführungsform in Kombination mit der in FIG 21 gezeigten Ausführungsform der Entnahmevorrichtung 15.

Die Spule 240 erstreckt sich allerdings nicht als Wickelspule um das Entnahmegehäuse 30 (mit Längsachse kollinear zu der Achse 45), sondern die Spule 240 weist eine oder mehrere Teilspulen 431 auf, deren jeweilige Mittelachse 711 normal auf eine Tangentialebene zu der Achse 45 und dem zylinderförmig ausgebildeten Sondenabschnitt 50 steht.

FIG 30 zeigt eine Schnittansicht entlang einer in FIG 29 gezeigten Schnittebene J-J durch die in FIG 29 gezeigte Ausführungsform der Entnahmevorrichtung 15.

Die Teilspulen 431 sind in Umfangsrichtung entlang eines Kreisbogens um die Achse 45 verlaufend ausgebildet. Bei Bestromung der Spule 240 ist das erste Magnetfeld 266 entlang einer Ebene senkrecht zu der Achse 45 orientiert und bildet dort mit den weiteren ersten Magnetfeldern 266 der anderen Teilspulen 431 das Gesamtmagnetfeld 155 aus. Die Spule 240 kann aus mehreren in Umfangsrichtung versetzt zueinander angeordneten Teilspulen 431 ausgebildet sein. Die Teilspulen 431 können einzeln bestromt und beschaltet sein oder gemeinsam mit elektrischer Energie versorgt werden, wobei dann das Ende einer Teilspule 431 unmittelbar den Anfang der nächsten, beispielsweise um z. B. 90° versetzt, angeordneten Teilspule 431 bildet.

FIG 31 zeigt einen Ausschnitt eines Längsschnitts durch eine Entnahmevorrichtung 15 gemäß einer weiteren Ausführungsform.

Die Entnahmevorrichtung 15 ist im Wesentlichen identisch zu der in den vorangegangenen FIGN, insbesondere zu der in FIGN 6 bis 10 gezeigten Ausgestaltung ausgebildet. Im Folgenden wird ausschließlich auf die Unterschiede der in FIG 31 gezeigten Ausgestaltung gegenüber der in den FIGN 6 bis 10 gezeigten Ausgestaltung der Entnahmevorrichtung 15 eingegangen.

In FIG 31 ist beispielhaft die erfindungsgemäße weitere Isolierschicht 450 nur bereichsweise auf der äußeren zweiten Umfangsseite 136 angeordnet. Die weitere Isolierschicht 450 ist beispielsweise nur zwischen der Polfläche 245, 250 und der zweiten äußeren Umfangsseite 136 angeordnet, sodass die zweite äußere Umfangsseite 136 bereichsweise durch die Isolierschicht 85 ummantelt ist.

Die weitere Isolierschicht 450 ist in Radialrichtung dünn ausgebildet, sodass das erste Magnetfeld 266 besonders leicht die weitere Isolierschicht 450 durchdringen kann und somit nur ein relativ kleiner Verlust der Feldstärke des Gesamtmagnetfelds 155 im Innenraum 90 durch die weitere Isolierschicht 450 hervorgerufen wird. Von besonderem Vorteil ist hierbei, wenn die Isolierschicht 85, 450 für einen Langzeitbetrieb geeignet ist. Dabei kann von besonderem Vorteil sein, wenn die Isolierschicht 85, 450 wenigstens einen der folgenden vierten Werkstoffe aufweist: Elastomer, Silikonkautschuk, dauertemperaturbeständiges Material (bis 20000 h) bis 180° C (VDE = 2G), Keramik, Glasfaser, Thermoplast oder auch andere Kunststoffe oder geeignete Materialien.

FIG 32 zeigt einen Ausschnitt eines Halblängsschnitts durch eine Entnahmevorrichtung 15 gemäß einer weiteren Ausführungsform.

Die Entnahmevorrichtung 15 ist im Wesentlichen eine Kombination aus der in FIG 31 gezeigten Entnahmevorrichtung 15 und der in FIG 15 gezeigten Entnahmevorrichtung 15. Dabei ist zusätzlich zu der in FIG 15 gezeigten Entnahmevorrichtung 15 die in FIG 31 erläuterte weitere Isolierschicht 450 zwischen dem zweiten Gehäusebereich 420 und der ersten Polfläche 245 und dem dritten Gehäusebereich 425 und der zweiten Polfläche 250 vorgesehen. Der zweite und/oder der dritte Gehäusebereich 420, 425 sind wie in FIG 15 erläutert ausgebildet.

FIG 33 zeigt einen Längsschnitt durch eine Entnahmevorrichtung 15 gemäß einer weiteren Ausführungsform.

Die Entnahmevorrichtung 15 ist im Wesentlichen identisch zu der in den vorangegangenen FIGN, insbesondere zu der in den FIGN 6 bis 10 gezeigten Ausführungsform der Entnahmevorrichtung 15 ausgebildet. Im Folgenden wird ausschließlich auf die Unterschiede der in FIG 33 gezeigten Ausführungsform gegenüber der in den FIGN 6 bis 10 gezeigten Ausführungsform eingegangen.

Die Magnetanordnung 150 weist eine Vielzahl von in Umfangsrichtung versetzt um die Achse 45 beabstandet zueinander angeordnete Magneten 265 auf, wobei jeder der Magneten 265 in FIG 33 als Permanentmagnet 232 ausgebildet ist. Der Permanentmagnet 232 ist beispielhaft stabförmig ausgebildet und liegt mit der ersten Polfläche 245 an der zweiten äußeren Umfangsseite 136, beispielsweise außenseitig des Filterabschnitts 55, an. Die zweite Polfläche 250 der Magnete 265 ist jeweils radial außenseitig beabstandet zu der zweiten äußeren Umfangsseite 136 angeordnet. Jeder der Permanentmagnete 232 stellt ein zweites Magnetfeld 452 bereit, wobei die zweiten Magnetfelder 452 zumindest im Innenraum 90 das Gesamtmagnetfeld 155 ausbilden.

FIG 34 zeigt eine Schnittansicht entlang einer in FIG 33 gezeigten Schnittebene K-K durch die in FIG 33 gezeigte Entnahmevorrichtung 15.

Die Magnete 265 der Magnetanordnung 150 sind in den FIGN 33 und 34 derart ausgerichtet, dass sie die gleiche radiale Orientierung hinsichtlich des jeweils von den Magneten 265 bereitgestellten zweiten Magnetfelds 452 aufweisen. Die zweiten Magnetfelder 452 der Magneten 265 bilden im Innenraum 90 das Gesamtmagnetfeld 155 aus. Selbstverständlich kann zumindest einer der Magneten 265 eine andere Orientierung aufweisen. So kann beispielsweise einer der Magneten 265 derart orientiert sein, dass die erste Polfläche 245 radial außen angeordnet ist und mit der zweiten Polfläche 250 der Magnete 265 an der zweiten äußeren Umfangsseite 136 anliegt. Auch können alle Magnete 265 umgekehrt zu der in FIG 34 gezeigten Orientierung orientiert sein, sodass die zweite Polfläche 250 an der zweiten äußeren Umfangsseite 136 anliegt und die erste Polfläche 245 radial außen angeordnet ist.

Von besonderem Vorteil ist, wenn der als Permanentmagnet 232 ausgebildete Magnet 265 der Magnetanordnung 150 wenigstens einen der folgenden dritten Werkstoffe aufweist: unlegierten Stahl, hartmagnetischen Werkstoff, halb-hart magnetischen Werkstoff, legierten Stahl, Wolfram, Kobalt, legierten Stahl mit Wolfram und/oder Kobalt, Eisen-Aluminiumnickelkobalt-Legierung oder Seltenerd-Legierung, SmCo, NdFeB.

Die in den FIGN 33 und 34 gezeigte Ausführungsform hat den Vorteil, dass die mit Permanentmagneten 232 ausgebildet Magnetanordnung 150 besonders temperaturständig ist, sodass das heiße Gas 200 besonders heiß in den Innenraum 90 angesaugt werden kann, ohne dass dadurch die Magnetanordnung 150 beschädigt wird. Dadurch kann der Sondenabschnitt 50 in Axialrichtung besonders kurzgehalten werden oder die Entnahmevorrichtung 15 bei besonders hohen Prozesstemperaturen eingesetzt werden. Insbesondere wird eine thermische Überhitzung der Magnetanordnung 150 verhindert. So kann beispielsweise das heiße Gas 200 mit Temperaturen zwischen 90 und 500 °C im Innenraum 90, insbesondere im Ringspalt 105, geführt werden, ohne dass die Magnetanordnung 150 ohne eigene Kühlung durch die Verwendung von geeigneten Permanentmagneten 232 beschädigt wird. Bei Verwendung einer speziellen Magnetkühlung (z. B. über Kühlluft oder Kühlwasser) kann die Temperatur des zu analysierenden heißen Gases 200 noch höher sein, ohne dass die Magnetanordnung 150 beschädigt wird.

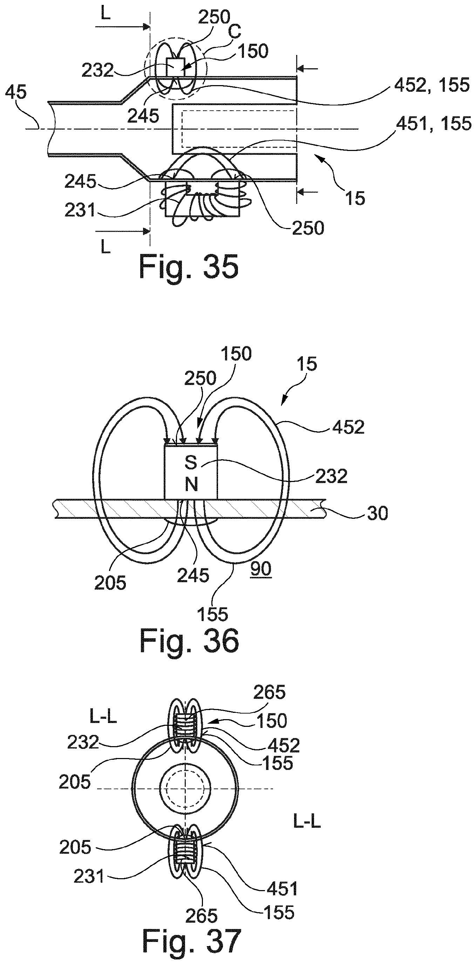

FIG 35 zeigt einen Längsschnitt durch eine Entnahmevorrichtung 15 gemäß einer weiteren Ausführungsform.

Die Entnahmevorrichtung 15 ist im Wesentlichen eine Kombination aus der in den FIGN 33 und 34 erläuterten Ausgestaltung der Entnahmevorrichtung 15 mit der in den FIGN 6 bis 10 gezeigten Ausführungsform. Dabei weist die Magnetanordnung 150 wenigstens einen Permanentmagneten 232 und einen Elektromagneten 231 auf. Die Anzahl der Permanentmagneten 232 und der Elektromagneten 231 ist frei wählbar. In der Ausführungsform weist die Magnetanordnung 150 lediglich einen einzigen Permanentmagneten 232 und einen einzigen Elektromagneten 231 auf, die in radialer Richtung gegenüberliegend angeordnet sind. Dabei ist in axialer Richtung der Permanentmagnet 232 zu dem Elektromagnet 231 derart orientiert, dass die Polflächen 245, 250 des Permanentmagneten 232 senkrecht zu einer radialen Richtung in Bezug auf die Achse 45 orientiert sind. Auch wäre eine Anordnung des Permanentmagneten 232 in axialer Richtung zwischen der ersten Polfläche 245 und der zweiten Polfläche 250 des Elektromagneten 231 möglich. Auch könnte der Permanentmagnet 232 auf axialer Höhe der zweiten Polfläche 250 des Elektromagneten 231 angeordnet sein.

FIG 36 zeigt einen in Figur 35 markierten Ausschnitt C der in FIG 35 gezeigten Entnahmevorrichtung 15.

Der Permanentmagnet 232 stellt das zweite Magnetfeld 452 bereit, wobei das zweite Magnetfeld 452 an der ersten Polfläche 245 aus dem Permanentmagneten 232 austritt. Das zweite Magnetfeld 452 durchdringt im Wesentlichen in radialer Richtung verlaufend den Innenraum 90. Im Innenraum 90 bilden die mehreren zweiten Magnetfelder 452 das Gesamtmagnetfeld 155 aus. In Axialrichtung der Entnahmevorrichtung 15 beabstandet zu der ersten Polfläche 245 durchdringen die Magnetfeldlinien des zweiten Magnetfeldes 452 (in FIG 36 dargestellt) das Entnahmegehäuse 30 abermals und verlaufen zu der zweiten Polfläche 250.

Durch die im Wesentlichen in einer Ebene senkrecht zu der Achse 45 orientierte Ausrichtung des Permanentmagneten 232 kann die Magnetanordnung 150 in Axialrichtung besonders schlank ausgebildet sein, sodass die Entnahmevorrichtung 15 einen besonders kompakten Aufbau aufweist. Insbesondere dadurch, dass die erste Polfläche 245 parallel zu der Achse 45 ausgerichtet ist, verläuft das zweite Magnetfeld 452 sowohl auf der zur Zuführöffnung 60 zugewandten Seite als auch auf der zur Zuführöffnung 60 abgewandten Seite des Permanentmagneten 232 zurück zu der zweiten Polfläche 250, sodass in axialer Richtung das Gesamtmagnetfeld 155 im Innenraum 90 besonders breit ist. Dadurch wird eine gute Abscheidewirkung des Vorabscheiders 40 bewirkt.

FIG 37 zeigt eine Schnittansicht entlang einer in FIG 35 gezeigten Schnittebene L-L durch die in FIG 35 gezeigte Entnahmevorrichtung 15.

In der Ausführungsform sind die beiden Magnete 265 radial gegenüberliegend zueinander angeordnet. Auch kann die Magnetanordnung 150 mehrere Permanentmagnete 232 und mehrere Elektromagnete 231 aufweisen, wobei die Permanentmagnete 232 und Elektromagnete 231 in einem vordefinierten Muster, beispielsweise in Umfangsrichtung abwechselnd zueinander, an dem Entnahmegehäuse 30 angeordnet sein können. In aktiviertem Zustand des Elektromagneten 231 stellt der Elektromagnet 231 während des zweiten und dritten Verfahrensschritts 305, 310 das erste Magnetfeld 266 bereit. Der Permanentmagnet 232 stellt ein in FIG 36 als zweites Magnetfeld 452 bezeichnetes Magnetfeld bereit, wobei das erste und zweite Magnetfeld 266, 452 zusammen das Gesamtmagnetfeld 155 im Innenraum 90 ausbilden.

Die Kombination von einem Elektromagneten 231 mit einem Permanentmagneten 232 hat den Vorteil, dass auch bei einer thermischen Beschädigung beispielsweise der Spule 240 oder des Spulenkerns 235 eine zuverlässige Vorfilterung und Abscheidung des ersten Anteils des Partikelmaterials 205 mittels des durch den Permanentmagneten 232 bereitgestellten zweiten Magnetfelds 452 erfolgt.

Auch zum Reinigen der Entnahmevorrichtung 15 wird im fünften Verfahrensschritt 320 der Elektromagnet 231 bzw. die Elektromagnete 231 derart bestromt werden, dass der Elektromagnet 231 bzw. die Elektromagnete 231 jeweils gegenüber dem zweiten und dritten Verfahrensschritt 305, 310 ein drittes Magnetfeld 453 bereitstellen, das jeweils gegenpolig zu dem erste Magnetfeld 266 ist. Das dritte Magnetfeld 453 bzw. die dritten Magnetfelder 453 neutralisieren das bzw. die zweiten Magnetfelder 452 des bzw. der Permanentmagnete 232, sodass das durch das dritte und zweite Magnetfeld 453, 452 ausgebildete Gesamtmagnetfeld 155 im Innenraum 90 im Wesentlichen zumindest reduziert, vorzugsweise neutralisiert bzw. aufgehoben ist. Auf den sechsten Verfahrensschritt 325 wird verzichtet und der siebte bis achte Verfahrensschritt 330 bis 335 werden parallel zu dem fünften Verfahrensschritt 320 durchgeführt. Erst nach Abschluss des achten Verfahrensschritts 335 wird der Elektromagnet 231 deaktiviert.

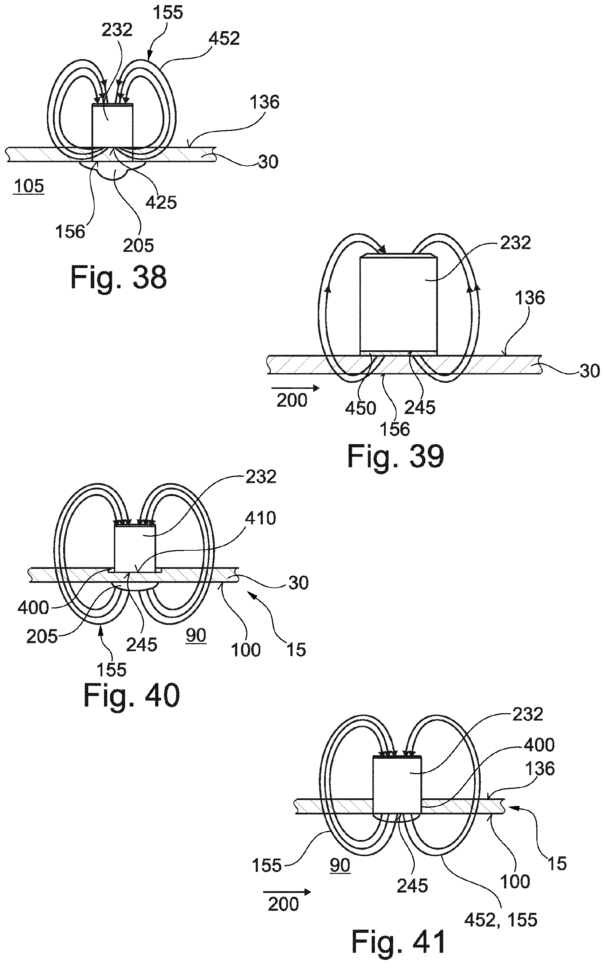

FIG 38 zeigt einen Ausschnitt eines Längsschnitts durch eine Entnahmevorrichtung 15 gemäß einer weiteren Ausführungsform.

Die Entnahmevorrichtung 15 ist in FIG 38 im Wesentlichen eine Kombination aus der in den FIGN 33 und 34 gezeigten Entnahmevorrichtung 15 mit der in FIG 12 erläuterten Entnahmevorrichtung 15. Dabei wurde gegenüber der in FIG 33 und 34 gezeigten Entnahmevorrichtung 15 der paramagnetische erste Werkstoff des Entnahmegehäuses 30, so wie in FIG 12 erläutert, durch den ferritischen und/oder ferromagnetischen Werkstoff, wie in FIG 12, erläutert, ersetzt.

Diese Ausgestaltung hat den Vorteil, dass das zweite Magnetfeld 452 zur Ausbildung des Gesamtmagnetfelds 155 bereits im Entnahmegehäuse 30 in Axialrichtung und/oder in Umfangsrichtung aus der ersten Polfläche 245 kommend abgelenkt wird. Diese Ausgestaltung hat den Vorteil, dass insbesondere bei einem schmalen Ringspalt 105 ein tiefes Eindringen des Gesamtmagnetfelds 155 in die Filtereinrichtung 35 vermieden wird und gleichzeitig ein gutes Vorabscheiden des ersten Anteils an Partikelmaterial 205 sichergestellt ist. Ferner wird eine Aufmagnetisierung der Filtereinrichtung 35 durch das in radialer Richtung kurze Gesamtmagnetfeld 155 vermieden. Die Abscheidefläche 156 ist gegenüber FIG 33 und 34 in axialer Richtung breiter.

FIG 39 zeigt einen Ausschnitt einer Entnahmevorrichtung 15 gemäß einer weiteren Ausführungsform.

Die Entnahmevorrichtung 15 ist im Wesentlichen identisch zu der in den FIGN 33 und 34 erläuterten Ausführungsform ausgestaltet. Zusätzlich ist die erfindungsgemäße weitere Isolierschicht 450 zwischen der ersten Polfläche 245 und der zweiten äußeren Umfangsseite 136 des Entnahmegehäuses 30 vorgesehen. Dadurch wird eine Überhitzung des Permanentmagneten 232 vermieden, da ein Wärmeeintrag entweder vom heißen Gas 200 und/oder der Heizeinrichtung 135 (in FIG 39 nicht dargestellt) in die Magnetanordnung 150 reduziert ist. Dadurch wird eine Umorientierung, beispielsweise der Weißschen Bezirke des Permanentmagneten 232, vermieden. Dadurch eignet sich die in FIG 39 gezeigte Ausführungsform insbesondere, wenn der Sondenabschnitt 50 besonders kurz ist und das heiße Gas 200 im Innenraum 90 an der Abscheidefläche 156 mit einer Temperatur von bis zu 500 °C entlangströmt. Soll das Entnahmegehäuse 30 besonders heißes Gas 200 bis 500 °C führen, so eignet sich insbesondere austenitischer oder ferritischer rostfreier Stahl als erster Werkstoff für das Entnahmegehäuse 30. Alternativ ist auch ein temperaturbeständiger Kunststoff und/oder eine Keramik und/oder eine andere Legierung als erster Werkstoff für das Entnahmegehäuse 30 in diesem Fall geeignet.

FIG 40 zeigt einen Ausschnitt eines Längsschnitts durch eine Entnahmevorrichtung 15 gemäß einer weiteren Ausführungsform.

Die Entnahmevorrichtung 15 ist im Wesentlichen eine Kombination aus der in den FIGN 33 und 34 gezeigten Ausführungsform der Entnahmevorrichtung 15 und der in FIG 13 erläuterten ersten Ausnehmung 400. In die erste Ausnehmung 400 greift beispielsweise abschnittsweise der Permanentmagnet 232 ein und liegt mit der ersten Polfläche 245 an dem Ausnehmungsgrund 410 an. Dadurch wird sichergestellt, dass ein Abstand zwischen der ersten Polfläche 245 und der inneren Umfangsseite 100 besonders gering ist, sodass das durch den Permanentmagneten 232 im Innenraum 90 erzeugte Gesamtmagnetfeld 155 besonders stark ist. Dadurch wird eine besonders gute Abscheidung von Partikelmaterial 205 im Innenraum 90 durch den Vorabscheider 40 sichergestellt. Auf die zweite Ausnehmung 405 wird verzichtet. Die erste Ausnehmung 400 und der Permanentmagnet 232 können korrespondierend zueinander ausgebildet sein.

FIGN 41-44 zeigen nicht mit der Erfindung kombinierbare Abwandlungen.

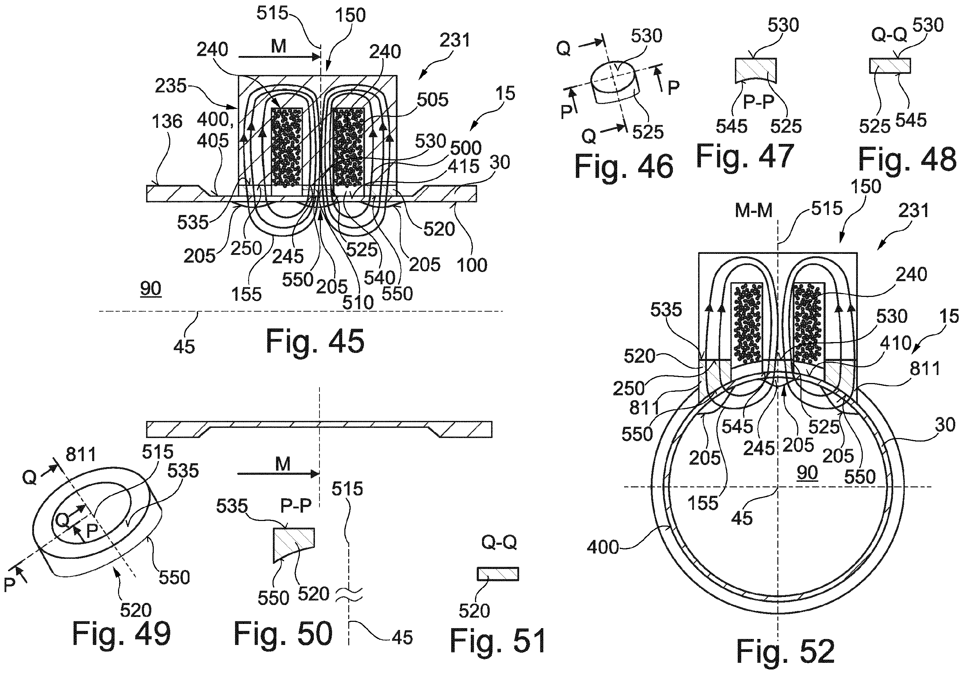

FIG 45 zeigt einen Ausschnitt eines Längsschnitts durch eine Entnahmevorrichtung 15 gemäß einer weiteren Ausführungsform.

Die Entnahmevorrichtung 15 ist im Wesentlichen identisch zu der in den FIGN 6-10 gezeigten Ausführungsform ausgebildet. Im Folgenden wird ausschließlich auf die Unterschiede der in FIG 45 gezeigten Ausgestaltung der Entnahmevorrichtung 15 gegenüber der in den FIGN 6 bis 10 gezeigten Ausgestaltung eingegangen.

Der Spulenkern 235 weist einen Topfabschnitt 500 auf, der topfförmig ausgebildet ist. Der Topfabschnitt 500 begrenzt innenseitig eine Spulenaufnahme 505. In die Spulenaufnahme 505 ragt ein Dorn 510, der innenseitig die Spulenaufnahme 505 begrenzt. Der Dorn 510 weist im Wesentlichen die gleiche Erstreckung senkrecht zur Achse 45 auf wie der Topfabschnitt 500. Die Spulenaufnahme 505 ist somit innenseitig durch den Dorn 510 und außenseitig durch den Topfabschnitt 500 begrenzt. Auf der zum Innenraum 90 abgewandten Seite des Spulenkerns 235 verschließt der Topfabschnitt 500 die Spulenaufnahme 505.

Die Spulenaufnahme 505 kann ringspaltartig ausgebildet sein. Auch eine andere Ausgestaltung des Spulenkerns 235 wäre denkbar. In der Spulenaufnahme 505 ist die Spule 240 um den Dorn 510 gewickelt. Die Spule 240 füllt beispielsweise im Wesentlichen vollständig die Spulenaufnahme 505 aus. Die Spule 240 kann beispielsweise zusätzlich zur Fixierung am Spulenkern 235 in der Spulenaufnahme 505 mit einer Kunststoffmatrix vergossen sein. Die Spulenaufnahme 505 ist auf der zum Innenraum 90 des Entnahmegehäuses 30 zugewandten Seite hin geöffnet.

Die erste Polfläche 245 ist am Dorn 510 auf der zum Entnahmegehäuse 30 zugewandten Seite angeordnet. Die erste Polfläche 245 kann beispielsweise kreisförmig ausgebildet sein und sich im Wesentlichen in einer Ebene erstrecken. Die zweite Polfläche 250 ist auf der zum Entnahmegehäuse 30 zugewandten Seite des Topfabschnittes 500 angeordnet. Die zweite Polfläche 250 ist beispielsweise ringförmig um eine weitere Achse 515 verlaufend ausgebildet. Die weitere Achse 515 ist senkrecht zur Achse 45 ausgebildet und schneidet vorzugsweise die Achse 45. Der Dorn 510 ist beispielsweise entlang der weiteren Achse 515 ausgebildet.

Zusätzlich kann die Magnetanordnung 150 einen Adapterring 520 und ein Koppelelement 525 aufweisen. Das Koppelelement 525 liegt radial außenseitig mit einer ersten Koppelfläche 530 an der ersten Polfläche 245 an. Dabei können das Koppelelement 525 und der Dorn 510 einen identischen Querschnitt aufweisen.

Der Adapterring 520 ist ringförmig entlang eines Zylindermantels um die weitere Achse 515 verlaufend ausgebildet. Der Adapterring 520 liegt mit einer zweiten Koppelfläche 535, die beispielsweise plan ausgebildet ist, an der zweiten Polfläche 250 an. Der Adapterring 520 und das Koppelelement 525 können den Werkstoff des zweiten Gehäusebereiches 420 aufweisen. Auch können der Adapterring 520 und/oder das Koppelelement 525 mit abnehmendem Abstand zu der Achse 45 in eine Richtung parallel zu der Achse 45 und/oder in Umfangsrichtung zu der Achse 45 breiter werden.

In der Ausführungsform ist beispielhaft der Spulenkern 235, wie in FIG 11 erläutert, einstückig und materialeinheitlich ausgebildet. Auch wäre denkbar, dass der Spulenkern 235, wie in FIG 10 erläutert, mehrteilig ausgebildet ist.

In dem Entnahmegehäuse 30 kann die Ausnehmung 400, 405 angeordnet sein, wobei die Ausnehmungen 400, 405 in Längsrichtung ineinander übergehend ausgebildet sind. Dadurch bilden die Ausnehmungen 400, 405 eine in Axialrichtung breite Ausnehmung 400, 405 gemeinsam aus. Der Ausnehmungsgrund 410 verläuft beispielhaft entlang eines Zylindermantels um die Achse 45. Dabei kann zwischen der Spule 240 und dem Ausnehmungsgrund 410 ein dritter Spalt 540 vorgesehen sein. Auch kann die Spule 240 spaltfrei angeordnet sein. Der dritte Spalt 540 weist im Wesentlichen in radialer Richtung bezogen auf die Achse 45 die gleiche minimale Erstreckung auf wie das Koppelelement 525.

FIG 46 zeigt eine perspektivische Darstellung des in FIG 45 gezeigten Koppelelementes 525.

Die erste Koppelfläche 530 ist plan ausgebildet und weist in einer Draufsicht auf das Koppelelement 525 eine im Wesentlichen beispielhafte kreisförmige Ausgestaltung auf. Auch eine andere Ausgestaltung des Koppelelementes 525, insbesondere in der Draufsicht auf das Koppelelement 525, wäre denkbar.

FIG 47 zeigt eine Schnittansicht entlang einer in FIG 46 gezeigten Schnittebene P-P durch das in den FIGN 45 und 46 gezeigte Koppelelement 525.

Auf der zur ersten Koppelfläche 530 in Radialrichtung gegenüberliegenden Seite weist das Koppelelement 525 eine erste Auflagefläche 545 auf, wobei die erste Auflagefläche 545 konkav ausgebildet ist. Dabei kann die erste Auflagefläche 545 insbesondere entlang eines Zylindermantels um die Achse 45 verlaufend, ausgebildet sein.

FIG 48 zeigt eine Schnittansicht entlang einer in FIG 46 gezeigten Schnittebene Q-Q durch das Koppelelement 525.

In der Schnittebene Q-Q ist der Querschnitt des Koppelelementes 525 rechteckförmig.

FIG 49 zeigt eine perspektivische Darstellung des in FIG 45 gezeigten Adapterrings.

Die zweite Koppelfläche 535 ist beispielhaft plan ausgebildet und erstreckt sich in einer Ebene parallel zu der Achse 45.

FIG 50 zeigt eine Schnittansicht entlang der in FIG 49 gezeigten Schnittebene P-P durch den Adapterring 520.

Mit zunehmendem Abstand zu der weiteren Achse 515 nimmt eine Dicke des Adapterrings 520 durch die entlang eines Zylindermantels um die Achse 45 verlaufende zweite Auflagefläche 550 und der in der Ebene verlaufenden zweiten Koppelfläche 535 zu.

FIG 51 zeigt eine Schnittansicht entlang der in FIG 49 gezeigten Schnittebene Q-Q durch den Adapterring 520.

Die Schnittebene Q-Q ist dabei derart ausgerichtet, dass die Achse 45 in der Schnittebene Q-Q verläuft. In der in FIG 51 gezeigten Schnittebene Q-Q weist der Adapterring 520 eine rechteckförmige Ausgestaltung im Schnitt aus.

FIG 52 zeigt eine Schnittansicht entlang einer in FIG 45 gezeigten Schnittebene M-M durch die in FIG 45 gezeigte Entnahmevorrichtung 15.

Dabei ist in der Ausführungsform nur ein Elektromagnet 231 in FIG 45 und 52 aus Übersichtlichkeitsgründen dargestellt.

Der Adapterring 520 liegt mit der zweiten Auflagefläche 550 und das Koppelelement 525 liegt mit der ersten Auflagefläche 545 an dem Ausnehmungsgrund 410 flächig auf. Dabei kann die erste Polfläche 245 mit der ersten Koppelfläche 530 stoffschlüssig verbunden sein. Ebenso kann die zweite Koppelfläche 535 stoffschlüssig mit der zweiten Polfläche 250 verbunden sein. Dadurch wird ein ungewolltes Ablösen des Adapterringes 520 und/oder des Koppelelements 525 von dem Spulenkern 235 zuverlässig vermieden.

Zur Befestigung des Elektromagneten 231 an dem Entnahmegehäuse 30 kann an der Auflagefläche 545, 550 der Adapterring 520 und/oder das Koppelelement 525 vorzugsweise stoffschlüssig mit dem Entnahmegehäuse 30 verbunden sein. Zusätzlich oder alternativ wäre auch eine formschlüssige und/oder kraftschlüssige Verbindung des Magneten 231 und/oder des Adapterrings 520 und/oder des Koppelelements 525, beispielsweise mittels einer Hilfskonstruktion zum Tragen des Elektromagneten 231 und/oder des Adapterrings 520 und/oder des Koppelelements 525, an dem Entnahmegehäuse 30 denkbar. Die Hilfskonstruktion kann zusätzlich den Elektromagneten 231, insbesondere den Spulenkern 235 sowie den Adapterring 520 und das Koppelelement 525, an den Ausnehmungsgrund 410 tragen.

Bei Bestromung der Spule 240 bildet die Spule 240 das erste Magnetfeld 266 aus, das in den Innenraum 90 des Entnahmegehäuses 30 eindringt. Durch die geometrische Ausgestaltung des Spulenkerns 235 sowie der Anordnung des Adapterrings 520 und des Koppelelementes 525 zwischen dem Spulenkern 235 und dem Entnahmegehäuse 30 tritt das erste Magnetfeld 266 vom Dorn 510 über das Koppelelement 525 in den Innenraum 90 des Entnahmegehäuses 30 ein. Dabei teilt sich im Innenraum 90 das erste Magnetfeld 266 auf, sodass das erste Magnetfeld 266 in Umfangsrichtung, in FIG 52 in radialer Richtung bezogen auf die weitere Achse 515, in beide Umfangsrichtungen verläuft. Das erste Magnetfeld 266 tritt durch das Entnahmegehäuse 30 durch und tritt in den Adapterring 520 an der zweiten Auflagefläche 550 ein. Der Adapterring 520 leitet das erste Magnetfeld 266 hin zur zweiten Koppelfläche 535, an der das erste Magnetfeld 266 in den Topfabschnitt 500 eintritt. Der Topfabschnitt 500 leitet das erste Magnetfeld 266 zu dem Dorn 510, sodass der magnetische Fluss geschlossen ist.

Die in den FIGN 45-52 gezeigte Ausgestaltung hat den Vorteil, dass in Umfangsrichtung, bezogen auf die Achse 45, das erste Magnetfeld 266 besonders breit ausgebildet ist. Dadurch kann eine Anzahl von Elektromagneten 231, die in Umfangsrichtung um das Entnahmegehäuse 30 vorgesehen sind, geringgehalten werden. So sind beispielsweise in einer Ausführung mit einer Magnetanordnung 150 gemäß FIG 52 vorzugsweise nur vier Elektromagnete 231 vorzusehen, um mittels der jeweils ersten Magnetfelder 266 das Gesamtmagnetfeld 155 in dem Innenraum 90 so auszubilden, dass es sich in Umfangsrichtung in dem Innenraum 90 im Wesentlichen vollständig um die Achse 45 erstreckt. Dadurch wird eine gute Abscheidewirkung des Vorabscheiders 40 erzielt.

Es wird darauf hingewiesen, dass die in den FIGN gezeigten unterschiedlichen Ausführungsformen auch andersartig als oben gezeigt miteinander kombiniert werden können oder andersartig ausgebildet sein können. Insbesondere ist dabei die konstruktive Ausgestaltung und/oder Anordnung der Magnetanordnung 150 beispielhaft. Anstatt der in den FIGN gezeigten Ausgestaltungen kann die Magnetanordnung 150 auch anders ausgebildet und/oder an dem Entnahmegehäuse 30 positioniert werden. Insbesondere die in den FIGN gezeigten Ausführformen der Magnete 265 sind beispielhaft.

Ferner ist das Verfahren zum Betrieb der in den FIGN gezeigten Entnahmevorrichtung 15 und des Systems 10 nur eine von zahlreichen Möglichkeiten, die Entnahmevorrichtung 15 bzw. das System 10 zu betreiben. Auch kann anstatt oder zusätzlich zu der Reinigung mittels des Reinigungsgases 210 die Entnahmevorrichtung 15 mechanisch, insbesondere mittels eines Schiebers oder anderer mechanischer Reinigungskonstruktionen, gereinigt werden.

### Bezugszeichenliste

- 10: System
- 15: Entnahmevorrichtung
- 20: Analyseeinrichtung
- 25: Gasfördereinrichtung
- 26: Steuereinrichtung
- 30: Entnahmegehäuse
- 35: Filtereinrichtung
- 40: Vorabscheider
- 45: Achse
- 46: Innenrohr
- 50: Sondenabschnitt
- 55: Filterabschnitt
- 56: Deckel
- 60: Zuführöffnung
- 65: Abführöffnung
- 70: Reaktionsgefäß
- 71: Abgasstrang
- 75: Gefäßinnenraum
- 80: erste Kühleinrichtung
- 85: (thermische) Isolierschicht
- 90: Innenraum
- 95: erste äußere Umfangsseite (der Filtereinrichtung)
- 100: innere Umfangsseite
- 105: Ringspalt
- 110: Blasrohr
- 115: Übergangsabschnitt
- 120: Abführkanal
- 125: erste Fluidverbindung
- 134: Förderpumpe
- 135: Heizeinrichtung
- 136: zweite äußere Umfangsseite (des Entnahmegehäuses)
- 150: Magnetanordnung
- 155: Gesamtmagnetfeld
- 156: Abscheidefläche
- 160: erste Verbindung
- 165: zweite Verbindung
- 170: Ausblaseinrichtung
- 171: erstes Sperrventil
- 172: zweites Sperrventil
- 175: zweite Fluidverbindung
- 176: dritte Fluidverbindung
- 180: Graph
- 181: erster Teilabschnitt
- 182: zweiter Teilabschnitt
- 183: dritter Teilabschnitt
- 185: Ausblasöffnung
- 195: vierte Verbindung
- 196: dritte Verbindung
- 200: heißes Gas
- 205: Partikelmaterial
- 210: Reinigungsgas
- 215: Düse
- 219: sechste Verbindung
- 225: erstes Ventil
- 226: zweites Ventil
- 228: vierte Fluidverbindung
- 229: fünfte Fluidverbindung
- 230: fünfte Verbindung
- 231: Elektromagnet
- 232: Permanentmagnet
- 233: sechste Fluidverbindung
- 234: Umgebung
- 235: Spulenkern
- 236: siebte Fluidverbindung
- 237: Gaskühler
- 238: achte Fluidverbindung
- 239: neunte Fluidverbindung
- 240: Spule
- 243: zehnte Fluidverbindung
- 241: Verzweigung
- 242: Drossel
- 244: elfte Fluidverbindung
- 245: erste Polfläche
- 250: zweite Polfläche
- 255: erste Stirnseite (der Magnetanordnung)
- 260: zweite Stirnseite (der Filtereinrichtung)
- 265: Magnet
- 266: erstes Magnetfeld
- 270: erster Spalt
- 275: erster Schenkel
- 280: zweiter Schenkel
- 281: Joch
- 285: Kernelement
- 290: weitere Magnetanordnung
- 295: weiteres Gesamtmagnetfeld

- 300: erster Verfahrensschritt
- 305: zweiter Verfahrensschritt
- 310: dritter Verfahrensschritt
- 315: vierter Verfahrensschritt
- 320: fünfter Verfahrensschritt
- 325: sechster Verfahrensschritt
- 330: siebter Verfahrensschritt
- 335: achter Verfahrensschritt
- 340: neunter Verfahrensschritt

- 400: erste Ausnehmung
- 405: zweite Ausnehmung
- 410: Ausnehmungsgrund
- 415: erster Gehäusebereich
- 420: zweiter Gehäusebereich
- 425: dritter Gehäusebereich
- 427: Steg
- 429: stoffschlüssige Verbindung
- 430: Zylindermantel
- 431: Teilspule
- 445: weitere Spule
- 450: weitere (thermische) Isolierschicht
- 452: zweites Magnetfeld
- 453: drittes Magnetfeld
- 455: dritte äußere Umfangsseite
- 460: Verbindungssteg
- 465: zweiter Spalt

- 500: Topfabschnitt
- 505: Spulenaufnahme
- 510: Dorn
- 515: weitere Achse
- 520: Adapterring
- 525: Koppelelement
- 530: erste Koppelfläche
- 535: zweite Koppelfläche
- 540: dritter Spalt
- 545: erste Auflagefläche
- 550: zweite Auflagefläche

- 711: Mittelachse

## Patentansprüche

1. Entnahmevorrichtung (15) zur Entnahme eines heißen Gases (200) aus einem Abgasstrang (71) eines Reaktionsgefäßes (70), insbesondere eines LD-Konverters oder eines Lichtbogenofens,
- wobei die Entnahmevorrichtung (15) ein Entnahmegehäuse (30), eine Filtereinrichtung (35) und einen Vorabscheider (40) mit einer Magnetanordnung (150) aufweist,
- wobei das heiße Gas (200) zumindest einen ersten Anteil und einen zweiten Anteil an Partikelmaterial (205) aufweist,
- wobei das Entnahmegehäuse (30) eine Zuführöffnung (60) zur Zuführung des heißen Gases (200) in einen Innenraum (90) des Entnahmegehäuses (30) aufweist,
- wobei stromabwärtsseitig der Zuführöffnung (60) die Filtereinrichtung (35) im Innenraum (90) angeordnet ist, um bei Durchführung des heißen Gases (200) durch die Filtereinrichtung (35) den zweiten Anteil an Partikelmaterial (205) aus dem heißen Gas (200) zu filtern,
- wobei die Magnetanordnung (150) ein Gesamtmagnetfeld (155) bereitstellt, das zumindest abschnittsweise den Innenraum (90) zwischen der Filtereinrichtung (35) und dem Entnahmegehäuse (30) zur Abscheidung des ersten Anteils an Partikelmaterial (205) aus den heißen Gas (200) an einer Abscheidefläche (156) der Entnahmevorrichtung (15) durchdringt, **gekennzeichnet durch**
- eine thermische Isolierschicht (450),
- wobei die thermische Isolierschicht (450) zwischen dem Entnahmegehäuse (30) und der Magnetanordnung (150) und außenseitig auf einer äußeren Umfangsseite (136) des Entnahmegehäuses (30) angeordnet ist,
- wobei die thermische Isolierschicht (450) die Magnetanordnung (150) thermisch gegenüber dem Entnahmegehäuse (30) isoliert.

2. Entnahmevorrichtung (15) nach Anspruch 1,
- wobei das Entnahmegehäuse (30) einen ersten Gehäusebereich (415) und einen zweiten Gehäusebereich (420, 425) aufweist,
- wobei zumindest der zweite Gehäusebereich (420, 425) einen ferritischen und/oder ferromagnetischen Werkstoff aufweist,
- wobei der erste Gehäusebereich (415) den Innenraum (90) begrenzt und ausgebildet ist, das heiße Gas (200) im Innenraum (90) zu führen,
- wobei an dem zweiten Gehäusebereich (420, 425) die Magnetanordnung (150) zumindest abschnittweise angeordnet und ausgebildet ist, ein durch die Magnetanordnung (150) bereitstellbares Magnetfeld (266, 452, 453) in den Innenraum (90) zur Ausbildung des Gesamtmagnetfelds (155) zu führen,
- wobei der erste Gehäusebereich (415) als ersten Werkstoff ein paramagnetisches Material aufweist.

3. Entnahmevorrichtung (15) nach Anspruch 2,
- wobei das Entnahmegehäuse (30) an einer äußeren Umfangsseite (136) wenigstens eine sich in Richtung des Innenraums (90) erstreckende Ausnehmung (400, 405) aufweist,
- wobei in dem ersten Gehäusebereich (415) die Ausnehmung (400) angeordnet ist,
- wobei der zweite Gehäusebereich (420, 425) zumindest abschnittweise in der Ausnehmung (400) angeordnet ist,
- wobei die Magnetanordnung (150) außenseitig des zweiten Gehäusebereichs (420, 425) angeordnet ist.

4. Entnahmevorrichtung (15) nach einem der Ansprüche 1 bis 3,
- wobei das Entnahmegehäuse (30) an einer äußeren Umfangsseite (136) wenigstens eine sich in Richtung des Innenraums (90) erstreckende Ausnehmung (400, 405) aufweist,
- wobei in die Ausnehmung (400, 405) zumindest abschnittsweise die Magnetanordnung (150) eingreift,
- wobei ein Ausnehmungsgrund (410) der Ausnehmung (400, 405) die Ausnehmung (400, 405) von dem Innenraum (90) fluidisch abtrennt.

5. Entnahmevorrichtung (15) nach einem der vorhergehenden Ansprüche,
- wobei sich das Entnahmegehäuse (30) entlang einer Achse (45) erstreckt,
- wobei die Magnetanordnung (150) wenigstens zwei in Umfangsrichtung bezogen auf die Achse (45) versetzt zueinander angeordnete Magnete (265) aufweist,
- wobei jeder der Magnete (265) jeweils ein Magnetfeld (266, 452) bereitstellt,
- wobei die Magnetfelder (266, 452) zumindest abschnittsweise den Innenraum (90) durchdringen und gemeinsam das Gesamtmagnetfeld (155) ausbilden.

6. Entnahmevorrichtung (15) nach einem der vorhergehenden Ansprüche,
- wobei sich das Entnahmegehäuse (30) entlang einer Achse (45) erstreckt,
- wobei die Magnetanordnung (150) wenigstens einen Magneten (265) aufweist,
- wobei der Magnet (265) eine erste Polfläche (245) und eine versetzt zu der ersten Polfläche (245) angeordnete zweite Polfläche (250) aufweist,
- wobei ein Magnetfeld (266) des Magneten (265) an der ersten Polfläche (245) aus dem Magneten (265) austritt und an der zweiten Polfläche (250) in den Magneten (265) eintritt,
- wobei der Magnet (265) an dem Entnahmegehäuse (30) derart angeordnet ist, dass das Magnetfeld (266) zumindest teilweise das Gesamtmagnetfeld (155) in dem Innenraum (90) ausbildet,
- wobei die erste Polfläche (245), bezogen auf eine Strömungsrichtung des heißen Gases (200) in dem Innenraum (90), stromaufwärtsseitig zu der zweiten Polfläche (250) angeordnet ist, und/oder
- wobei die erste Polfläche (245) und die zweite Polfläche (250) in Umfangsrichtung zu der Achse (45) versetzt angeordnet sind.

7. Entnahmevorrichtung (15) nach einem der Ansprüche 5 oder
- wobei der Magnet (265) als Elektromagnet (231) ausgebildet ist und wenigstens einen Spulenkern (235) aufweist,
- wobei der Spulenkern (235) mehrlagig oder einstückig und materialeinheitlich ausgebildet ist,
- wobei der Spulenkern (235) wenigstens einen der folgenden Werkstoffe aufweist: weichmagnetisches Material, Reineisen, Eisen, Silizium, Nickel, Eisen-Silizium-Legierung, Eisen-Silizium-Legierung gemäß DIN EN 10106, Eisen-Silizium-Legierung gemäß DIN EN 10107, Nickel-Eisen-Legierung,
und/oder
- wobei der Magnet (265) als Permanentmagnet (232) ausgebildet ist und wenigstens einen der folgenden Werkstoffe aufweist: unlegierten Stahl, legierten Stahl, Wolfram, Kobalt, legierten Stahl mit Wolfram und/oder Kobalt, Fe-AlNiCo-Legierung, Seltene-Erden-Legierung, SmCo, NdFeB, hartmagnetisches Material.

8. System (10) zur Entnahme eines heißen Gases (200) aus einem Abgasstrang (71) eines Reaktionsgefäßes (70), insbesondere eines LD-Konverters oder eines Lichtbogenofen,
- wobei das System (10) eine Entnahmevorrichtung (15) nach einem der vorhergehenden Ansprüche, eine Gasfördereinrichtung (25) und eine Analyseeinrichtung (20) aufweist,
- wobei die Entnahmevorrichtung (15) mit der Analyseeinrichtung (20) und der Gasfördereinrichtung (25) fluidisch verbunden ist,
- wobei die Gasfördereinrichtung (25) ausgebildet ist, das heiße Gas (200) über die Entnahmevorrichtung (15) aus dem Abgasstrang (71) des Reaktionsgefäßes (70) in die Analyseeinrichtung (20) zu fördern,
- wobei die Analyseeinrichtung (20) ausgebildet ist, eine Zusammensetzung des heißen Gases (200) zumindest teilweise zu bestimmen.

9. Verfahren zum Betrieb einer Entnahmevorrichtung (15) nach einem der Ansprüche 1 bis 7,
- wobei das heiße Gas (200) über die Zuführöffnung (60) in das Entnahmegehäuse (30) gefördert wird,
- wobei der Vorabscheider (40) den ersten Anteil an Partikelmaterial (205) aus dem heißen Gas (200) mittels des Gesamtmagnetfelds (155) an der Abscheidefläche (156) abscheidet,
- wobei die Filtereinrichtung (35) den zweiten Anteil an Partikelmaterial (205) aus dem heißen Gas (200) filtert,
- wobei nach zumindest abschnittsweiser Durchströmung des Gesamtmagnetfelds (155) das heiße Gas (200) die Filtereinrichtung (35) durchströmt,
- wobei das gefilterte heiße Gas (200) aus der Entnahmevorrichtung (15) abgeführt wird,
- wobei die thermische Isolierschicht (450) die Magnetanordnung (150) thermisch gegenüber dem Entnahmegehäuse (30) isoliert.

10. Verfahren nach Anspruch 9,
- wobei eine Förderung des heißen Gases (200) beendet wird,
- wobei ein Reinigungsgas (210) in die Entnahmevorrichtung (15) eingeleitet wird,
- wobei das Reinigungsgas (210) zumindest teilweise den ersten Anteil an Partikelmaterial (205) von der Abscheidefläche (156) löst,
- wobei das Reinigungsgas (210) mit dem gelösten ersten Anteil an Partikelmaterial (205) über die Zuführöffnung (60) zur Reinigung der Entnahmevorrichtung (15) abgeblasen wird.

11. Verfahren nach Anspruch 9 oder
- wobei ein Elektromagnet (231) der Magnetanordnung (150) zum Abscheiden des ersten Anteils an Partikelmaterial (205) derart gesteuert wird, dass der Elektromagnet (231) ein erstes Magnetfeld (266) zur Ausbildung des Gesamtmagnetfelds (155) im Innenraum (90) bereitstellt,
- wobei der Elektromagnet (231) zur Reinigung der Entnahmevorrichtung (15) derart gesteuert wird, dass der Elektromagnet (231) ein drittes Magnetfeld (453) bereitstellt,
- wobei das dritte Magnetfeld (453) gegenpolig zu dem ersten Magnetfeld (266) ausgebildet ist, um im Innenraum (90) der Entnahmevorrichtung (15) aufmagnetisierte Komponenten zumindest teilweise zu entmagnetisieren,
- wobei zumindest teilweise der erste Anteil an Partikelmaterial (205) von der Abscheidefläche (156) gelöst wird.

12. Verfahren nach einem der Ansprüche 9 bis 11,
- wobei ein Elektromagnet (231) der Magnetanordnung (150) zum Abscheiden des ersten Anteils des Partikelmaterials (205) derart gesteuert wird, dass der Elektromagnet (231) ein erstes Magnetfeld (266) und ein Permanentmagnet (232) der Magnetanordnung (150) ein zweites Magnetfeld (452) zur Ausbildung des Gesamtmagnetfelds (155) im Innenraum (90) bereitstellen,
- wobei der Elektromagnet (231) derart gesteuert wird, dass der Elektromagnet (231) ein drittes Magnetfeld (453) bereitstellt,
- wobei das dritte Magnetfeld (453) gegenpolig zu dem ersten Magnetfeld (266) ausgebildet ist, um zumindest abschnittsweise im Innenraum (90) das zweite Magnetfeld (452) zu reduzieren, vorzugsweise zu neutralisieren,
- wobei zumindest teilweise der erste Anteil an Partikelmaterial (205) von der Abscheidefläche (156) gelöst wird,
- wobei vorzugsweise das dritte Magnetfeld (453) zumindest während der Reinigung der Abscheidefläche (156) bereitgestellt wird.

## Claims

1. Withdrawal apparatus (15) for withdrawing a hot gas (200) from a flue gas line (71) of a reaction vessel (70), in particular an LD converter or an arc furnace,
- wherein the withdrawal apparatus (15) comprises a withdrawal housing (30), a filter device (35) and a preliminary separator (40) having a magnet arrangement (150),
- wherein the hot gas (200) comprises at least a first fraction and a second fraction of particle material (205),
- wherein the withdrawal housing (30) has a feed opening (60) for feeding the hot gas (200) into an interior space (90) of the withdrawal housing (30),
- wherein the filter device (35) is arranged in the interior space (90) downstream of the feed opening (60), in order to filter the second fraction of particle material (205) from the hot gas (200) as the hot gas (200) passes through the filter device (35),
- wherein the magnet arrangement (150) provides an overall magnetic field (155) which penetrates the interior space (90) between the filter device (35) and the withdrawal housing (30) at least in certain portions to separate the first fraction of particle material (205) from the hot gas (200) on a separation face (156) of the withdrawal apparatus (15),
**characterized by**
- a thermally insulating layer (450),
- wherein the thermally insulating layer (450) is arranged between the withdrawal housing (30) and the magnet arrangement (150) and on the outer side of an external circumferential side (136) of the withdrawal housing (30),
- wherein the thermally insulating layer (450) thermally insulates the magnet arrangement (150) with respect to the withdrawal housing (30).

2. Withdrawal apparatus (15) according to Claim 1,
- wherein the withdrawal housing (30) has a first housing region (415) and a second housing region (420, 425),
- wherein at least the second housing region (420, 425) comprises a ferritic and/or ferromagnetic material,
- wherein the first housing region (415) delimits the interior space (90) and is designed to guide the hot gas (200) in the interior space (90),
- wherein the magnet arrangement (150) is arranged at least in certain portions on the second housing region (420, 425) and is designed to guide a magnetic field (266, 452, 453) that can be provided by the magnet arrangement (150) into the interior space (90) to form the overall magnetic field (155),
- wherein the first housing region (415) comprises a paramagnetic material as first material.

3. Withdrawal apparatus (15) according to Claim 2,
- wherein the withdrawal housing (30) has at least one recess (400, 405), which extends towards the interior space (90), on an outer circumferential side (136),
- wherein the recess (400) is arranged in the first housing region (415),
- wherein the second housing region (420, 425) is arranged in the recess (400) at least in certain portions,
- wherein the magnet arrangement (150) is arranged on the outer side of the second housing region (420, 425).

4. Withdrawal apparatus (15) according to one of Claims 1 to 3,
- wherein the withdrawal housing (30) on an outer circumferential side (136) has at least one recess (400, 405), which extends towards the interior space (90),
- wherein the magnet arrangement (150) engages in the recess (400, 405) at least in certain portions,
- wherein a recess bottom (410) of the recess (400, 405) fluidically separates the recess (400, 405) from the interior space (90).

5. Withdrawal apparatus (15) according to one of the preceding claims,
- wherein the withdrawal housing (30) extends along an axis (45),
- wherein the magnet arrangement (150) has at least two magnets (265) which are offset in relation to one another in the circumferential direction with respect to the axis (45),
- wherein each of the magnets (265) provides a magnetic field (266, 452),
- wherein the magnetic fields (266, 452) at least in certain portions penetrate the interior space (90) and together form the overall magnetic field (155).

6. Withdrawal apparatus (15) according to one of the preceding claims,
- wherein the withdrawal housing (30) extends along an axis (45),
- wherein the magnet arrangement (150) has at least one magnet (265),
- wherein the magnet (265) has a first pole face (245) and a second pole face (250) which is offset in relation to the first pole face (245),
- wherein a magnetic field (266) of the magnet (265) leaves the magnet (265) at the first pole face (245) and enters the magnet (265) at the second pole face (250),
- wherein the magnet (265) is arranged on the withdrawal housing (30) in such a way that the magnetic field (266) at least partially forms the overall magnetic field (155) in the interior space (90),
- wherein the first pole face (245) is upstream of the second pole face (250) with respect to a direction of flow of the hot gas (200) in the interior space (90),
and/or
- wherein the first pole face (245) and the second pole face (250) are offset in the circumferential direction in relation to the axis (45).

7. Withdrawal apparatus (15) according to either of Claims 5 and 6,
- wherein the magnet (265) is in the form of an electromagnet (231) and has at least one coil core (235),
- wherein the coil core (235) has a multilayer form, or a onepiece form made of one and the same material,
- wherein the coil core (235) comprises at least one of the following materials: soft-magnetic material, pure iron, iron, silicon, nickel, iron-silicon alloy, iron-silicon alloy according to DIN EN 10106, iron-silicon alloy according to DIN EN 10107, nickel-iron alloy,
and/or
- wherein the magnet (265) is in the form of a permanent magnet (232) and comprises at least one of the following materials: unalloyed steel, alloyed steel, tungsten, cobalt, alloyed steel with tungsten and/or cobalt, Fe-AlNiCo alloy, rare earth alloy, SmCo, NdFeB, hard-magnetic material.

8. System (10) for withdrawing a hot gas (200) from a flue gas line (71) of a reaction vessel (70), in particular an LD converter or an arc furnace,
- wherein the system (10) comprises a withdrawal apparatus (15) according to one of the preceding claims, a gas conveying device (25) and an analysing device (20),
- wherein the withdrawal apparatus (15) is fluidically connected to the analysing device (20) and the gas conveying device (25),
- wherein the gas conveying device (25) is designed to convey the hot gas (200) from the flue gas line (71) of the reaction vessel (70) to the analysing device (20) via the withdrawal apparatus (15),
- wherein the analysing device (20) is designed to at least partially determine a composition of the hot gas (200).

9. Method for operating a withdrawal apparatus (15) according to one of Claims 1 to 7,
- wherein the hot gas (200) is conveyed to the withdrawal housing (30) through the feed opening (60),
- wherein the preliminary separator (40) separates the first fraction of particle material (205) from the hot gas (200) by means of the overall magnetic field (155) on the separation face (156),
- wherein the filter device (35) filters the second fraction of particle material (205) from the hot gas (200),
- wherein the hot gas (200) flows through the filter device (35) after having flowed through the overall magnetic field (155) at least in certain portions,
- wherein the filtered hot gas (200) is discharged from the withdrawal apparatus (15),
- wherein the thermally insulating layer (450) thermally insulates the magnet arrangement (150) with respect to the withdrawal housing (30).

10. Method according to Claim 9,
- wherein the conveyance of the hot gas (200) is ended,
- wherein a cleaning gas (210) is introduced into the withdrawal apparatus (15),
- wherein the cleaning gas (210) at least partially detaches the first fraction of particle material (205) from the separation face (156),
- wherein the cleaning gas (210) with the detached first fraction of particle material (205) is bled out through the feed opening (60) to clean the withdrawal apparatus (15).

11. Method according to Claim 9 or 10,
- wherein an electromagnet (231) of the magnet arrangement (150) is controlled to separate the first fraction of particle material (205) in such a way that the electromagnet (231) provides a first magnetic field (266) for forming the overall magnetic field (155) in the interior space (90),
- wherein the electromagnet (231) is controlled to clean the withdrawal apparatus (15) in such a way that the electromagnet (231) provides a third magnetic field (453),
- wherein the third magnetic field (453) is of opposite polarity to the first magnetic field (266), in order to at least partially demagnetize magnetized components in the interior space (90) of the withdrawal apparatus (15),
- wherein the first fraction of particle material (205) is at least partially detached from the separation face (156).

12. Method according to one of Claims 9 to 11,
- wherein an electromagnet (231) of the magnet arrangement (150) is controlled to separate the first fraction of particle material (205) in such a way that the electromagnet (231) provides a first magnetic field (266) and a permanent magnet (232) of the magnet arrangement (150) provides a second magnetic field (452) to form the overall magnetic field (155) in the interior space (90),
- wherein the electromagnet (231) is controlled in such a way that the electromagnet (231) provides a third magnetic field (453),
- wherein the third magnetic field (453) is of opposite polarity to the first magnetic field (266), in order to reduce, preferably to neutralize, the second magnetic field (452) at least in certain portions in the interior space (90),
- wherein the first fraction of particle material (205) is at least partially detached from the separation face (156),
- wherein the third magnetic field (453) is preferably provided at least while the separation face (156) is being cleaned.

## Revendications

1. Dispositif de prélèvement (15) pour prélever un gaz chaud (200) à partir d'une ligne de gaz d'échappement (71) d'un récipient de réaction (70), en particulier d'un convertisseur LD ou d'un four à arc,
- dans lequel le dispositif de prélèvement (15) comprend un boîtier de prélèvement (30), un dispositif de filtre (35) et pré-séparateur (40) comprenant un agencement d'aimant (150),
- dans lequel le gaz chaud (200) comprend au moins une première fraction et une deuxième fraction de matière particulaire (205),
- dans lequel le boîtier de prélèvement (30) comprend un orifice d'arrivée (60) pour amener le gaz chaud (200) dans un compartiment intérieur (90) du boîtier de prélèvement (30),
- dans lequel le dispositif de filtre (35) est disposé dans le compartiment intérieur (90) en aval de l'orifice d'arrivée (60), afin de filtrer la deuxième fraction de matière particulaire (205) à partir du gaz chaud (200) lors du passage du gaz chaud (200) à travers le dispositif de filtre (35),
- dans lequel l'agencement d'aimant (150) produit un champ magnétique global (155) qui pénètre au moins par sections dans le compartiment intérieur (90) entre le dispositif de filtre (35) et le boîtier de prélèvement (30) pour séparer la première fraction de matière particulaire (205) du gaz chaud (200) sur une surface de séparation (156) du dispositif de prélèvement (15),
**caractérisé par** :
- une couche d'isolation thermique (450),
- dans lequel la couche d'isolation thermique (450) est disposée entre le boîtier de prélèvement (30) et l'agencement d'aimant (150) et du côté extérieur sur un côté périphérique extérieur (136) du boîtier de prélèvement (30), et
- dans lequel la couche d'isolation thermique (450) isole thermiquement l'agencement d'aimant (150) vis-à-vis du boîtier de prélèvement (30).

2. Dispositif de prélèvement (15) selon la revendication 1,
- dans lequel le boîtier de prélèvement (30) comprend une première partie de boîtier (415) et une deuxième partie de boîtier (420, 425),
- dans lequel au moins la deuxième partie de boîtier (420, 425) comprend un matériau ferritique et/ou ferromagnétique,
- dans lequel la première partie de boîtier (415) délimite le compartiment intérieur (90) et est configurée pour guider le gaz chaud (200) dans le compartiment intérieur (90),
- dans lequel l'agencement d'aimant (150) est disposé au moins par sections sur la deuxième partie de boîtier (420, 425) et est configuré pour guider un champ magnétique (266, 452, 453) produit par l'agencement d'aimant (150) dans le compartiment intérieur (90) de façon à former le champ magnétique global (155),
- dans lequel la première partie de boîtier (415) comprend à titre de premier matériau un matériau paramagnétique.

3. Dispositif de prélèvement (15) selon la revendication 2,
- dans lequel le boîtier de prélèvement (30) comprend sur un côté périphérique extérieur (136) au moins un creux (400, 405) s'étendant en direction du compartiment intérieur (90),
- dans lequel le creux (400) est disposé dans la première partie de boîtier (415),
- dans lequel la deuxième partie de boîtier (420, 425) est disposée au moins par sections dans le creux (400),
- dans lequel l'agencement d'aimant (150) est disposé du côté extérieur de la deuxième partie de boîtier (420, 425).

4. Dispositif de prélèvement (15) selon l'une des revendications 1 à 3, dans lequel :
- le boîtier de prélèvement (30) comprend sur un côté périphérique extérieur (136) au moins un creux (400, 405) s'étendant en direction du compartiment intérieur (90),
- l'agencement d'aimant (150) s'engage au moins par sections dans le creux (400, 405), et
- un fond de creux (410) du creux (400, 405) sépare le creux (400, 405) fluidiquement vis-à-vis du compartiment intérieur (90).

5. Dispositif de prélèvement (15) selon l'une des revendications précédentes, dans lequel :
- le boîtier de prélèvement (30) s'étend le long d'un axe (45),
- l'agencement d'aimant (150) comprend au moins deux aimants (265) disposés de façon décalée l'un vis-à-vis de l'autre par rapport à l'axe (45) dans la direction périphérique,
- chacun des aimants (265) produit respectivement un champ magnétique (266, 452), et
- les champs magnétiques (266, 452) pénètrent au moins en partie dans le compartiment intérieur (90) et forment en commun le champ magnétique global (155).

6. Dispositif de prélèvement (15) selon l'une des revendications précédentes, dans lequel :
- le boîtier de prélèvement (30) s'étend le long d'un axe (45),
- l'agencement d'aimant (150) comprend au moins un aimant (265),
- l'aimant (265) comprend une première surface polaire (245) et une deuxième surface polaire (250) disposée de façon décalée par rapport à la première surface polaire (245),
- un champ magnétique (266) de l'aimant (265) sort de l'aimant (265) au niveau de la première surface polaire (245) et entre dans l'aimant (265) au niveau de la deuxième surface polaire (250),
- l'aimant (265) est disposé sur le boîtier de prélèvement (30) de telle manière que le champ magnétique (266) forme au moins en partie le champ magnétique global (155) dans le compartiment intérieur (90),
- la première surface polaire (245) est disposée en amont de la deuxième surface polaire (250), vu dans la direction du flux de gaz chaud (200) dans le compartiment intérieur (90), et/ou
- la première surface polaire (245) et la deuxième surface polaire (250) sont disposées de façon décalée dans la direction périphérique par rapport à l'axe (45).

7. Dispositif de prélèvement (15) selon l'une des revendications 5 ou 6, dans lequel :
- l'aimant (265) est constitué sous forme d'un électroaimant (231) et comprend au moins un noyau de bobine (235),
- le noyau de bobine (235) est formé de plusieurs couches ou d'une seule pièce et dans un même matériau,
- le noyau de bobine (235) comprend au moins un des matériaux suivants : matériau magnétique doux, fer pur, fer, silicium, nickel, alliage fer-silicium, alliage fer-silicium selon DIN EN 10106, alliage fer-silicium selon DIN EN 10107, alliage nickel-fer, et/ou
- l'aimant (265) est constitué sous forme d'un aimant permanent (232) et comprend au moins un des matériaux suivants : acier non allié, acier allié, tungstène, cobalt, acier allié avec du tungstène et/ou du cobalt, alliage Fe-AlNiCo, alliage avec des terres rares, SmCo, NdFeB, matériau magnétique dur.

8. Système (10) de prélèvement d'un gaz chaud (200) à partir d'une ligne de gaz d'échappement (71) d'un récipient de réaction (70), en particulier d'un convertisseur LD ou d'un four à arc, dans lequel :
- le système (10) comprend un dispositif de prélèvement (15) selon l'une des revendications précédentes, un dispositif de transport de gaz (25) et un moyen d'analyse (20),
- le dispositif de prélèvement (15) est relié fluidiquement au moyen d'analyse (20) et au dispositif de transport de gaz (25),
- le dispositif de transport de gaz (25) est configuré de façon à amener le gaz chaud (200) dans le moyen d'analyse (20) via le dispositif de prélèvement (15) à partir de la ligne de gaz d'échappement (71) du récipient de réaction (70),
- le moyen d'analyse (20) est configuré pour déterminer au moins en partie une composition du gaz chaud (200).

9. Procédé de fonctionnement d'un dispositif de prélèvement (15) selon l'une des revendications 1 à 7, dans lequel :
- le gaz chaud (200) est transporté via l'orifice d'arrivée (60) dans le boîtier de prélèvement (30),
- le pré-séparateur (40) sépare la première fraction de matière particulaire (205) du gaz chaud (200) au moyen du champ magnétique global (155) sur la surface de séparation (156),
- le dispositif de filtre (35) filtre la deuxième fraction de matière particulaire (205) hors du gaz chaud (200),
- après la circulation au moins par sections du champ magnétique global (155), le gaz chaud (200) s'écoule à travers le dispositif de filtre (35),
- le gaz chaud filtré (200) est évacué du dispositif de prélèvement (15),
- la couche d'isolation thermique (450) isole thermiquement l'agencement d'aimant (150) vis-à-vis du boîtier de prélèvement (30).

10. Procédé selon la revendication 9, dans lequel :
- un transport du gaz chaud (200) est terminé,
- un gaz de nettoyage (210) est introduit dans le dispositif de prélèvement (15),
- le gaz de nettoyage(210) détache au moins en partie la première fraction de matière particulaire (205) de la surface de séparation (156),
- le gaz de nettoyage (210) contenant la première fraction de matière particulaire (205) détachée est soufflé via l'orifice d'arrivée pour nettoyer le dispositif de prélèvement (15).

11. Procédé selon la revendication 9 ou 10, dans lequel :
- un électroaimant (231) de l'agencement d'aimant (150) est commandé pour séparer la première fraction de matière particulaire (205) de manière à ce que l'électroaimant (231) produise un premier champ magnétique (266) afin de former le champ magnétique global (155) dans le compartiment intérieur (90),
- l'électroaimant (231) est commandé pour nettoyer le dispositif de prélèvement (15) de manière à ce que l'électroaimant (231) produise un troisième champ magnétique (453),
- le troisième champ magnétique (453) est formé avec une polarité inverse au premier champ magnétique (266), afin de démagnétiser au moins en partie des composantes magnétisées dans le compartiment intérieur (90) du dispositif de prélèvement (15),
- la première fraction de matière particulaire (205) est détachée au moins en partie de la surface de séparation (156) .

12. Procédé selon l'une des revendications 9 à 11, dans lequel :
- un électroaimant (231) de l'agencement d'aimant (150) est commandé pour séparer la première fraction de matière particulaire (205) de manière à ce que l'électroaimant (231) produise un premier champ magnétique (266) et qu'un aimant permanent (232) de l'agencement d'aimant (150) produise un deuxième champ magnétique (452) pour former le champ magnétique global (155) dans le compartiment intérieur (90),
- l'électroaimant (231) est commandé de manière à ce que l'électroaimant (231) produise un troisième champ magnétique (453),
- le troisième champ magnétique (453) est formé avec une polarité inverse au premier champ magnétique (266), afin de réduire, de préférence de neutraliser, au moins par sections, le deuxième champ magnétique (452) dans le compartiment intérieur (90),
- la première fraction de matière particulaire (205) est détachée au moins en partie de la surface de séparation (156),
- de préférence le troisième champ magnétique (453) est produit au moins durant le nettoyage de la surface de séparation (156).
